# EUROPÄISCHE PATENTSCHRIFT

(11) **EP 1 556 419 B1**
(45) Veröffentlichungstag und Bekanntmachung des Hinweises auf die Patenterteilung: **20.12.2006**
(21) Anmeldenummer: 03770965.6
(22) Anmeldetag: 10.10.2003
(51) Int. Cl.: C08F 8/00, C08L 23/02, C08L 23/26

(54) **DERIVATE VON POLYMEREN FÜR DIE PERMANENTE MODIFIZIERUNG VON HYDROPHOBEN POLYMEREN**
POLYMERIC DERIVATIVES FOR PERMANENTLY MODIFYING HYDROPHOBIC POLYMERS
DERIVES DE POLYMERES POUR LA MODIFICATION PERMANENTE DE POLYMERES HYDROPHOBES

(30) Priorität: 11.10.2002 DE 10247462
(43) Veröffentlichungstag der Anmeldung: 27.07.2005
(73) Patentinhaber: BASF Aktiengesellschaft, 67056 Ludwigshafen (DE)
(72) Erfinder: KARL, Ulrich, 67061 Ludwigshafen (DE); LANGE, Arno, 67098 Bad Dürkheim (DE); MIJOLOVIC, Darijo, 68309 Mannheim (DE)
(74) Vertreter: Hörschler, Wolfram Johannes
(86) Internationale Anmeldenummer: PCT/EP2003/011235
(87) Internationale Veröffentlichungsnummer: WO 2004/035635

(56) Entgegenhaltungen:
- EP-A- 0 324 278
- EP-A- 0 342 792
- EP-A- 0 397 499
- EP-A- 0 410 180
- EP-A- 0 459 237
- EP-A- 0 673 949
- EP-A- 0 709 403
- WO-A-01/70830
- WO-A-02/26840
- WO-A-94/09067
- WO-A-96/03479
- WO-A-96/26308
- WO-A-98/02468
- DE-A- 4 319 672
- DE-A- 4 433 273
- DE-B- 1 298 711
- US-A- 4 316 973
- US-A- 4 987 190
- J. P. KENNEDY: "New telechelic elastomers" APPLIED POLYMER SYMPOSIA, Bd. 39, 1982, Seiten 21-35, XP002273811 PARIS
- A. V. LUBNIN: "Synthesis and characterization of aldehyde-capped polyisobutylenes" POLYMER BULLETIN, Bd. 30, 1993, Seiten 19-24, XP000034383
- K. MAENZ: "Macromonomers based on low-molecular-weight polyisobutenes" DIE ANGEWANDTE MAKROMOLEKULARE CHEMIE, Bd. 242, Nr. 4244, 1996, Seiten 183-197, XP000068975

## Beschreibung

Die vorliegende Erfindung betrifft Polymerzusammensetzungen enthaltend wenigstens ein hydrophobes Polymer und wenigstens ein modifiziertes Polyisobuten; Fasern, Folien, Formkörper sowie deren Weiterverarbeitungsprodukte aufgebaut aus dieser Polymerzusammensetzung, ein Verfahren zur Herstellung der erfindungsgemäßen Polymerzusammensetzung, ein Verfahren zur Herstellung der Fasern, Folien und Formkörper aufgebaut aus der erfindungsgemäßen Polymerzusammensetzung; eingefärbte Polymerzusammensetzungen enthaltend wenigstens ein hydrophobes Polymer, wenigstens ein modifiziertes Polyisobuten und wenigstens einen Farbstoff; sowie Fasern, Folien und Formkörper aufgebaut aus der erfindungsgemäßen eingefärbten Polymerzusammensetzung und die Verwendung von modifizierten Polyisobutenen zur Behandlung von hydrophoben Polymeren.

Hydrophobe Polymere, insbesondere Polyolefine, zeichnen sich durch zahlreiche hervorragende Eigenschaften wie niedrige spezifische Dichte, hohe Reißfestigkeit, gute Beständigkeit gegenüber Chemikalien, geringe Benetzbarkeit durch polare Medien wie Wasser und Alkohole, niedriges Wasseraufnahmevermögen und daraus resultierendes schnelles Trocknen und eine geringe Verrottungsneigung sowie durch einen geringen Preis aus. Sie lassen sich hervorragend zu vielfältigen Formen wie Fasern, Folien und Formkörpern verarbeiten. Die geringe Benetzbarkeit durch polare Substanzen und die geringe Aufnahmefähigkeit durch diese Substanzen wirken sich jedoch auch nachteilig aus. So sind die hydrophoben Polymere, insbesondere Polyolefine, sowie daraus hergestellt Fasern, Folien und Formkörper nicht oder nur schlecht aus wässrigen Bädern färbbar, nicht oder nur schlecht lackier- oder bedruckbar und schlecht mit anderen Materialien verklebbar. Beschichtungen mit polaren Materialien, z. B. Polymeren oder Metallen, haften schlecht auf einer hydrophoben Polymeroberfläche.

Diese Mängel stehen einer noch breiteren Anwendung von hydrophoben Polymeren, insbesondere Polyolefinen, entgegen. So werden z. B. Polypropylenfaserrn trotz ihrer günstigen Eigenschaften als Bekleidungsfasern, speziell im Sport- bzw. Outdoor-Bekleidungssektor, selten verwendet. Um diese Nachteile der hydrophoben Polymere, insbesondere der Polyolefine, zu beheben, wurden zahlreiche Verfahren zur Hydrophilierung als einer Vorbedingung für die Färbbarkeit, Bedruckbarkeit, Lackierbarkeit bzw. Verklebbarkeit vorgeschlagen.

Es ist üblich, hydrophobe Polymerfasern zur Erzielung tiefer Farbtöne in Masse zu färben, das heißt, das farbgebende Pigment bei der Garnherstellung im Extruder zuzugeben. Auf diese Weise werden zwar gleichzeitig dunkle und gebrauchsechte Färbungen erreicht, jedoch ist lediglich die Herstellung großer massegefärbter Chargen wirtschaftlich sinnvoll, so dass nicht auf modisch bedingte Farbwünsche eingegangen werden kann. Des Weiteren sind brillante Farbtöne nicht erreichbar. Schließlich ergeben sich bei der Massefärbung große Abfallmengen, die bei einem Farbwechsel in Kauf genommen werden müssen.

Es sind mehrere grundsätzlich verschiedene Methoden zur Hydrophilierung und damit zur Verbesserung insbesondere der Anfärbbarkeit von hydrophoben Polymeren, insbesondere von Polyolefinen, aus wässrigen Färbebädern bekannt.

WO 93/06177 betrifft die Anwendung von Quellmitteln bei der Färbung von polymeren Fasern, die eine begrenzte Zahl von Zentren chemischer Affinität für Farbstoffe, insbesondere von Polyolefinfasern, aufweisen mit Dispersionsfarbstoffen. Dieses beim Polyesterfärben als Carrierverfahren bekannte Vorgehen zieht jedoch aufgrund der im Textil verbleibenden Rückstände humantoxikologische und Umweltprobleme nach sich.

Melliand Textilberichte 77 (1996) 588 - 592 und 78 (1997) 604 - 605 betrifft das Färben von Polypropylenfasern mit speziellen stark hydrophoben Dispersionsfarbstoffen unter Hochtemperaturbedingungen, wobei zusätzlich bevorzugt ausgewählte Tenside zur Färbeflotte gegeben werden, zur Erhöhung der Fixiergrade und um Färbungen hoher Egalität zu erhalten. Problematisch dabei ist, dass der Textilveredler ein zusätzliches Farbstoffsortiment ausschließlich für die Polyolefin-Färbung zur Verfügung halten müsste, was hohe Kosten nach sich zieht.

DE-A 2 210 878 betrifft die Färbung von unbehandelten Polyolefinfasern mit Metallkomplexfarbstoffen. Als Metalle werden Chrom, Kupfer, Eisen, Kobalt, Nickel, Zink oder Aluminium eingesetzt. Nachteilig bei diesem Verfahren ist, dass beim Tragen solcherart gefärbter Textilien geringe Mengen der verwendeten Schwermetalle auf die Haut gelangen und eventuell gesundheitsschädlich wirken können.

Des Weiteren sind zahlreiche Veröffentlichungen bekannt, die eine Modifikation der hydrophoben Polyolefine betreffen, insbesondere um eine Verbesserung der Anfärbbarkeit der Polyolefinfasern zu erreichen.

So betreffen JP-A 7032394, JP-A 6902090, JP-A 6921196 und JP-A 6931810 jeweils die Einarbeitung von Metallkomplexen in die Polymermatrix während der Faserherstellung. Diese Metallkomplexe können dann den Farbstoff im Faserinneren verankern. Ein Nachteil dieser Verfahren ist ebenfalls, dass geringe Mengen der verwendeten Metalle (genannt sind unter anderem Nickel, Zink, Chrom, Kupfer, Kobalt und Aluminium) beim Tragen solcherart gefärbter Textilien auf die Haut gelangen und eventuell gesundheitsschädlich wirken können.

EP-A 0 039 207 betrifft die Modifikation der Polyolefinfaser durch Einbringen stickstoffhaltiger, basisch wirkender Copolymere in die Spinnschmelze des Polyolefinmaterials. Auf diesem Wege werden diese basisch wirkenden Copolymere in dem Makromolekül verankert. Diese modifizierten Polyolefine haben dann eine Affinität zu anionischen Farbstoffen.

V. Flaris, Annual Techn. Conf. Soc. Plastic Engineers 2000, 2826 - 2830 betrifft anfärbbare Polypropylenfasern, die durch Mischen mit einem Reaktionsprodukt von Maleat-Polypropylen mit einem Polyetheramin modifiziert sind. Allerdings ist das modifizierte Polymer gelblich verfärbt und es müssen so hohe Mengen des zur Modifizierung eingesetzten Reaktionsproduktes eingesetzt werden, dass die Fasereigenschaften des Polypropylens, z. B. die Reißfestigkeit, beeinträchtigt werden.

DE-A 2 240 534 betrifft färbbare Kunststoffmassen auf Polyolefinbasis, die als Additiv ein Polyaminaddukt enthalten, das mindestens eine an ein Stickstoffatom gebundene Kohlenwasserstoffkette mit mindestens 25 Kohlenstoffatomen aufweist. Die Additive werden durch Vermischen mit dem Polyolefin in die Kunststoffmasse eingebracht. Nachteilig an diesem Verfahren sind die hohen Mengen an Additiven (mindestens 3 Gew.-%, bevorzugt 5-15 Gew.-% bezogen auf die Kunststoffmasse), die zur Erzielung der Anfärbbarkeit erforderlich sind und die Tatsache, dass diese Additive aus chlorierten Polyisobutenen erhalten werden.

Des Weiteren können die Polyolefine mittels Grafting-Methoden modifiziert werden.

So betrifft WO 96/26308 das Graften von Polyolefinen mit polaren Monomeren, z. B. Dialkylaminomethacrylaten, die Bindungen mit Farbstoffen eingehen können. Das Substrat wird mit dem polaren Monomer und Initiator imprägniert und durch Erhitzen zur Reaktion gebracht. Dieses Verfahren ist somit sehr aufwändig und erfordert die Handhabung ggf. schädlicher Monomere.

US 3,807,951 betrifft gepfropfte Polyolefine, die mit Stickstoff enthaltenden Monomeren wie N-Vinylpyridin, N-Vinylpyrrolidon oder Dialkylamino-Metharcrylaten gepfropft sind. Das Pfropfpolymer wird anschließend quaternisiert, wodurch eine Anfärbung mit anionischen Farbstoffen möglich ist. Nachteilig an diesem Verfahren ist, dass der Prozess sehr aufwändig durchzuführen ist und somit hohe Kosten verursacht. Des Weiteren werden durch die verwendeten Radikalstarter der Grafting-Prozesse die Polymerketten des Polyolefins oft stark verkürzt, so dass ihre technologischen Eigenschaften beeinträchtigt werden.

WO 94/09067 betrifft Mischungen aus funktionalisierten und unfunktionalisierten Polyolefinen. Die Funktionalisierung der Polyolefine erfolgt durch Umsetzung mit einem Carbonsäureanhydrid, bevorzugt mit Maleinsäureanhydrid. Dadurch werden Polyolefine mit einer verbesserten Affinität zu polaren Materialien, verbesserter Anfärbbarkeit und Bedruckbarkeit erhalten. Nachteilig ist, dass neben dem Grafting-Prozess zusätzlich ein Mischprozess durchgeführt werden muss.

Die Aufgabe der vorliegenden Erfindung ist die Bereitstellung von hydrophoben Polymeren, insbesondere von Polyolefinen, die mit hydrophilen Materialien modifizierbar sind, die insbesondere anfärbbar, bedruckbar, lackierbar und verklebbar sind. Die Modifizierung der hydrophoben Polymere, insbesondere der Polyolefine, soll dabei in einem einfachen Verfahren mit umweltfreundlichen und preiswerten Substanzen erfolgen.

Diese Aufgabe wird durch eine Polymerzusammensetzung gelöst, enthaltend
a) wenigstens ein hydrophobes Polymer in Form eines Homo- oder Copolymers des Propylens oder in Form eines Homo- oder Copolymers des Ethylens,
   und
b) wenigstens ein mit terminalen, polaren Gruppen modifiziertes Polyisobutyen, das durch Funktionalisierung von reaktivem Polyisobuten mit einem zahlenmittleren Molekulargewicht Mₙ von 150 bis 50000 erhalten wird.

Die erfindungsgemäßen Polymerzusammensetzungen sind einfach herstellbar und bewirken eine Hydrophilierung der eingesetzten hydrophoben Polymere, so dass die Polymerzusammensetzungen sowie Weiterverarbeitungsprodukte aus den Polymerzusammensetzungen färbbar, bedruckbar, lackierbar und verklebbar sind, ohne dass der Einsatz spezieller Farbstoffe, Lacke oder Klebstoffe erforderlich ist.

### Komponente A (Hydrophobe Polymere)

Es werden in den erfindungsgemäßen Polymerzusammensetzungen Homo- oder Copolymere des Propylens oder des Ethylens eingesetzt.

Der Anteil der Comonomere an dem Copolymer beträgt im Allgemeinen maximal 40 Gew.-%, zum Beispiel 20 - 30 % oder 2 - 10 %, in Abhängigkeit von der Anwendung.

In einer bevorzugten Ausführungsform wird als Polyolefin Polyethylen eingesetzt, besonders bevorzugt lineares Polyethylen (HDPE, LLDPE). Dieses kann in Form seines Homopolymers eingesetzt werden oder als statistisches oder Blockcopolymer, wobei alle üblichen Comonomere eingesetzt werden können.

In einer weiteren besonders bevorzugten Ausführungsform wird Polypropylen als Polyolefin eingesetzt. Dabei kann es sich um ein Homopolymer oder ein statistisches oder Blockcopolymer des Propylens handeln.

Die statistischen oder Blockpolypropylene können bis zu 40 Gew.-% eines Comonomers enthalten. Geeignete Comonomere sind beispielsweise Ethylen oder α-Olefine, Diene wie Hexadien-1,4, Hexadien 1,5, Heptadien-1,6, 2-Methylpentadien-1,4, Octadien-1,7, 6-Methylheptadien-1,5, oder Polyene wie Octatrien und Dicyclopentadien.

Die Polymere können im allgemeinen ataktisch, iso- oder syndiotaktisch sein, bevorzugt sind isotaktische Polymere. Die Polymere werden nach an sich bekannten Herstellverfahren hergestellt, beispielsweise unter Verwendung von Ziegler-Natta- oder Metallocen-Katalysatoren.

Weitere Details sind dem Fachmann bekannt oder können beispielsweise in "Ullmanns Encyclopedia (of Technical Chemistry), 6^{th} Edition, 2000 Electronic Release" im Kapitel "Polyolefine" und den dort angegebenen Referenzen nachgelesen werden.

### Komponente B (Modifiziertes Polyisobuten)

Bei dem als Komponente B eingesetzten modifizierten Polyisobuten handelt es sich um ein mit terminalen, polaren Gruppen modifiziertes Polyisobuten, das durch Funktionalisierung von Polyisobuten mit einem zahlenmittleren Molekulargewicht Mₙ von 150 bis 50000 und mit einem Gehalt an endständigen Doppelbindungen (α- und/oder β-Olefine) oder ihrer Vorstufe von wenigstens 60 Mol-% erhältlich ist.

Bei den modifizieren Polyisobutenen kann es sich um lineare oder im Wesentlichen lineare Polyisobuten-Derivate handeln, die nur an einem Kettenende eine polare Gruppe aufweisen. Derartige Strukturen werden auch als Kopf-Schwanz-Strukturen bezeichnet. Es kann sich weiterhin um lineare oder im Wesentlichen lineare Polyisobuten-Derivate handeln, die an beiden Kettenenden polare Gruppen aufweisen. Des Weiteren können auch verzweigte Polyisobuten-Derivate eingesetzt werden, welche mindestens drei Kettenenden mit polaren Gruppen aufweisen. Die Erfindung ist nicht auf ein bestimmtes Verzweigungsmuster beschränkt. Selbstverständlich können für die erfindungsgemäßen Polymerzusammensetzungen auch Gemische verschiedener Polyisobuten-Derivate eingesetzt werden.

Die modifizierten Polyisobuten-Derivate sind durch Funktionalisierung von reaktivem Polyisobuten als Ausgangsmaterial erhältlich. Reaktives Polyisobuten ist im Sinne der vorliegenden Anmeldung: Polyisobuten, das reaktive Gruppen an einem oder zwei oder - bei Einsatz verzweigter reaktiver Polyisobutene - an mindestens drei Kettenenden aufweist.

Bei den reaktiven Gruppen an den Kettenenden kann es sich prinzipiell um beliebige Gruppen handeln, vorausgesetzt sie sind durch eine geeignete Reaktion zu einer terminalen, polaren Gruppe umzusetzen. Bevorzugt handelt es sich bei den reaktiven Gruppen um α- oder β-Olefingruppen sowie -C(CH₃)₂-Z-Gruppen, welche direkt oder nach Eliminierung über die Olefinstufe umgesetzt werden können. Um die eingangs genannten Funktionalisierungsgrade erreichen zu können, muss jeweils mindestens eine entsprechende Menge an reaktiven Kettenenden im unmodifizierten Polyisobutylen vorhanden sein. Polyisobutylenketten mit einem nicht reaktiven Kettenende wie -C(CH₃)=C(CH₃)-CH(CH₃)₂ werden nicht polar modifiziert, wirken nicht und/oder verschlechtern die Wirkung. Bevorzugt ist daher eine größere Menge an reaktiven Kettenenden vorhanden. Bevorzugt werden die reaktiven Kettenenden in prinzipiell bekannter Art und Weise im Zuge des Abbruchs der Polymerisation gebildet, es ist jedoch auch möglich, wenngleich nicht bevorzugt, die Kettenenden in einem separaten Reaktionsschritt mit reaktiven Gruppen auszustatten. Besonders bevorzugt weist das reaktive Polyisobuten einen Gehalt an endständigen Doppelbindungen von wenigstens 50 Mol-%, bevorzugt von wenigstens 60 Mol-%, besonders bevorzugt von wenigstens 80 Mol-% auf. Dabei sind endständige Doppelbindungen des Polyisobutens solche Doppelbindungen, die in der α- oder β-Position des Polyisobutens vorhanden sind.

Unter reaktivem Polyisobuten wird im Sinne dieser Anmeldung bevorzugt ein Polyisobuten verstanden, das in Summe zu mindestens 60% aus Vinyl-Isomer (β-Olefin, R-CH=C(CH₃)₂ und / oder Vinyliden-Isomer (α-Olefin, R-C(CH₃)=CH₂) oder entsprechender Vorstufen wie R-C(CH₃)₂Cl aufgebaut ist.

Die erfindungsgemäß eingesetzten Polyisobutene weisen ein zahlenmittleres Molekulargewicht von Mₙ von 150 bis 50000 bevorzugt 200 bis 35.000, besonders bevorzugt 300 bis 6.000, beispielsweise etwa 550, etwa 1.000 oder etwa 2.300 auf. Die Molekulargewichtsverteilung der erfindungsgemäß eingesetzten Polyisobutene ist im Allgemeinen eng. Bevorzugt liegt die Molekulargewichtsverteilung (M_{w}/Mₙ) zwischen 1,05 und 4, besonders bevorzugt zwischen 2 und 3. Gewünschtenfalls ist jedoch auch möglich, Polyisobutene mit einer breiteren Molekulargewichtsverteilung von z. B. > 5 oder sogar > 12 einzusetzen.

Geeignete reaktive Polyisobutene können beispielsweise durch kationische Polymerisation von Isobuten erhalten werden.

Zur Synthese geeigneter Ausgangsmaterialien setzt man bevorzugt reines Isobuten ein. Es können aber zusätzlich auch kationisch polymerisierbare Comonomere verwendet werden. Die Menge an Comonomeren sollte jedoch im Regelfall weniger als 20 Gew.-%, vorzugsweise weniger als 10 Gew.-% und insbesondere weniger als 5 Gew.-% betragen.

Als Comonomere kommen vor allem Vinylaromaten wie Styrol und α-Methylstyrol, C₁-C₄-Alkylstyrole wie 2-, 3- und 4-Methylstyrol sowie 4-tert.-Butylstyrol, C₃- bis C₆-Alkene wie n-Buten, Isoolefine mit 5 bis 10 C-Atomen wie 2-Methylbuten-1, 2-Methylpenten-1, 2-Methylhexen-1, 2-Ethylpenten-1, 2 Ethylhexen-1 und 2 Propylhepten-1 in Betracht.

Als Isobuten-Einsatzstoffe zur Synthese des Ausgangsmaterials eignen sich sowohl Isobuten selber als auch Isobuten-haltige C₄-Kohlenwasserstoffströme, beispielsweise C₄-Raffinate, C₄-Schnitte aus der Isobuten-Dehydrierung, C₄-Schnitte aus Steamcrackern, FCC-Crackern (FCC: Fluid Catalysed Cracking), sofern sie weitgehend von darin enthaltenem 1,3-Butadien befreit sind. Erfindungsgemäß geeignete C₄-Kohlenwasserstoffströme enthalten in der Regel weniger als 500 ppm, vorzugsweise weniger als 200 ppm Butadien. Die Anwesenheit von Buten-1, cis- und trans-Buten-2 ist für das erfindungsgemäße Verfahren weitgehend unkritisch und führt nicht zu Selektivitätsverlusten. Typischerweise liegt die Konzentration in den C₄-Kohlenwasserstoffströmen im Bereich von 40 bis 60 Gew.-%. Bei Einsatz von C₄-Schnitten als Einsatzmaterial übernehmen die von Isobuten verschiedenen Kohlenwasserstoffe die Rolle eines inerten Lösungsmittels.

Als Katalysator können reines BF₃, seine Komplexe mit Elektronendonatoren oder Mischungen daraus eingesetzt werden. Elektronendonatoren (Lewis-Basen) sind Verbindungen, die ein freies Elektronenpaar, z. B. an einem O, N, P oder S-Atom, aufweisen und mit Lewis-Säuren Komplexe bilden können. Diese Komplexbildung ist in vielen Fällen erwünscht, da so die Aktivität der Lewis-Säure herabgesetzt wird und Nebenreaktionen zurückgedrängt werden. Beispiele für geeignete Elektronendonatoren sind Ether wie DiIsopropylether oder Tetrahydrofuran, Amine wie Triethylamin, Amide wie DiMethylacetamid, Alkohole wie Methanol, Ethanol, i-Propanol oder t-Butanol. Die Alkohole wirken außerdem als Protonenquelle und starten so die Polymerisation. Auch über Protonen aus ubiquitären Wasserspuren kann ein kationischer Polymerisationsmechanismus aktiv werden.

Als Lösungsmittel für die Polymerisation kommen alle organischen Verbindungen in Frage, die im gewählten Temperaturbereich flüssig sind und weder Protonen abspalten noch freie Elektronenpaare aufweisen. Zu nennen sind insbesondere cyclische und acyclische Alkane wie Ethan, iso- und n-Propan, n-Butan und seine Isomeren, Cyclopentan sowie n-Pentan und seine Isomeren, Cyclohexan sowie n-Hexan und seine Isomeren, n-Heptan und seine Isomeren sowie höhere Homologe, cyclische und acyclische Alkene wie Ethen, iso- und n-Propen, n-Buten, Cyclopenten sowie n-Penten, Cyclohexen sowie n-Hexen, n-Hepten, aromatische Kohlenwasserstoffe wie Benzol, Toluol oder die isomeren Xylole. Die Kohlenwasserstoffe können auch halogeniert sein. Beispiele halogenierter Kohlenwasserstoffe umfassen Methylchlorid, Methylbromid, Methylenchlorid, Methylenbromid, Ethylchlorid, E-thylbromid, 1,2-Dichlorethan, 1,1,1-Trichlorethan, Chloroform oder Chlorbenzol. Es können auch Gemische der Lösungsmittel eingesetzt werden, vorausgesetzt, es treten keine unerwünschten Eigenschaften auf.

Verfahrenstechnisch besonders empfehlenswert ist es, Lösungsmittel einzusetzen, die im gewünschten Temperaturbereich sieden. Die Polymerisation erfolgt üblicherweise bei -80°C bis 0°C, bevorzugt, -50°C bis -5°C und besonders bevorzugt bei -30°C bis -15°C.

Bei der kationischen Polymerisation unter BF₃-Katalyse werden weitgehend lineare Polyisobutene erhalten, die an einem Kettenende einen besonders hohen Gehalt an α-OlefinGruppen aufweisen. Bei geeigneter Reaktionsführung beträgt der α-Olefin-Gehalt nicht weniger als 80%.

Reaktive Polyisobutene, die an beiden Kettenenden reaktive α-Olefin-Gruppen aufweisen oder die verzweigt sind, können besonders elegant mittels lebender kationischer Polymerisation erhalten werden. Selbstverständlich können aber auch lineare Polyisobutene, die nur an einem Kettenende eine α-Olefin-Gruppen aufweisen, mit dieser Methode synthetisiert werden.

Bei der lebenden kationischen Polymerisation wird Isobuten mit einer geeigneten Kombination aus einem Initiatormolekül IXₙ mit einer Lewis-Säure S polymerisiert. Einzelheiten dieser Methode zur Polymerisation sind beispielsweise in Kennedy u. Ivan, "Carbocationic Macromolecular Engineering", Hanser Publishers 1992 offenbart.

Geeignete Initiatormoleküle IXₙ weisen eine oder mehrere Abgangsgruppen X auf. Bei der Abgangsgruppe X handelt es sich um eine Lewis-Base, die auch noch weiter substituiert sein kann. Beispiele für geeignete Abgangsgruppen umfassen die Halogene Fluor, Chlor, Brom und Jod, geradkettige und verzweigte Alkoxygruppen, wie C₂H₅O-, n-C₃H₇O-, i-C₃H₇O-, n-C₄H₉O-, i-C₄H₉O-, sec.-C₄H₉O- oder t-C₄H₉O-, sowie geradkettige und verzweigte Carboxygruppen wie CH₃ CO-O-, C₂H₅ CO-O-, n-C₃H₇ CO-O-, i-C₃H₇ CO-O-, n-C₄H₉ CO-O-, i-C₄H₉ CO-O-, sec. -C₄H₉ CO-O-, t-C₄H₉ CO-O-. Mit der oder den Abgangsgruppen verbunden ist der Molekülteil I, der unter Reaktionsbedingungen ausreichend stabile Carbokationen I⁺ ausbilden kann. Zur Auslösung der Polymerisation wird die Abgangsgruppe mittels einer geeigneten Lewis-Säure S abstrahiert: I-X + S --> I⁺ + XS⁻ (gezeigt hier nur für den Fall n=1). Das entstehende Carbokation I⁺ startet die kationische Polymerisation und wird in das entstehende Polymer eingebaut. Geeignete Lewis-Säuren S sind beispielsweise AlY₃, TiY₄, BY₃, SnY₄, ZnY₂ wobei Y für Fluor, Chlor, Brom oder Jod steht. Die Polymerisationsreaktion kann durch dir Vernichtung der Lewis-Säure abgebrochen werden, beispielsweise durch deren Reaktion mit Alkohol. Dabei bildet sich Polyisobuten welches über terminale -C(CH₃)₂-Z Gruppen verfügt, die anschließend in α- und β-Olefin-Endgruppen übergeführt werden können.
Als Initiatormolekül bevorzugt sind Strukturen, die tertiäre Carbokationen ausbilden können. Besonders bevorzugt sind Reste, die sich von den niederen Oligomeren des Isobutens H-[CH₂-C(CH₃)_{2]n}-X ableiten, wobei n bevorzugt für 2 bis 5 steht. Mit derartigen Initiatormolekülen gebildete lineare reaktive Polyisobutene weisen nur an einem Ende eine reaktive Gruppe auf.

Lineare Polyisobutene, die an beiden Enden reaktive Gruppen aufweisen, können erhalten werden, indem man Initiatormoleküle IXQ einsetzt, die zwei Abgangsgruppen X bzw. Q aufweisen, wobei X und Q gleich oder verschieden sein können. In der Technik bewährt haben sich Verbindungen, die -C(CH₃)₂-X Gruppen umfassen. Beispiele umfassen geradkettige oder verzweigte Alkylenreste CₙH₂ₙ (wobei n vorzugsweise Werte von 4 bis 30 einnehmen kann), die auch von einer Doppelbindung oder einem Aromaten unterbrochen sein können, wie
X-(CH₃)₂C-CH₂-C(CH₃)₂-Q, X-(CH₃)₂C-CH₂-C(CH₃)₂CH₂-C(CH₃)₂-Q,
X-(CH₃)₂C-CH₂-C(CH₃)₂CH₂-C(CH₃)₂CH₂-C(CH₃)₂-Q oder
X-(CH₃)₂C-CH₂-C(CH₃)₂CH₂-C(CH₃)₂CH₂-C(CH₃)₂-CH₂-C(CH₃)₂-Q,
X-(CH₃)₂C-CH=CH-C(CH₃)₂-Q oder para und/oder meta
X-(CH₃)₂C-C₆H₄-C(CH₃)₂-Q.

Verzweigte Polyisobutene können erhalten werden, indem man Initiatormoleküle IXₙ einsetzt, die 3 oder mehrere Abgangsgruppen aufweisen, wobei die Abgangsgruppen gleich oder verschieden sein können. Beispiele geeigneter Initiatormoleküle umfassen X-(CH₃)₂C-C₆H₃-[C(CH₃)₂-Q]-C(CH₃)₂-P als 1,2,4 und/oder 1,3,5-Isomer, wobei die Abgangsgruppen bevorzugt gleich sind, aber auch unterschiedlich sein können. Weitere Beispiele für mono-, di-, tri- oder polyfunktionelle Initiatormoleküle sind in dem eingangs zitierten Werk von Kennedy u. Ivan und der dort zitierten Literatur zu finden.

Die reaktiven Polyisobutene werden mit geeigneten Reagenzien zu den gewünschten Polyisobuten-Derivaten mit terminalen, polaren Gruppen umgesetzt.

Der Funktionalisierungsgrad der modifizierten Polyisobutyen-Derivate mit terminalen, polaren Gruppen beträgt mindestens 65%, bevorzugt mindestens 75% und ganz besonders bevorzugt mindestens 85%. Bei den nur an einem Kettenende polare Gruppen aufweisenden Polymeren bezieht sich diese Angabe nur auf dieses eine Kettenende. Bei den an beiden Kettenenden polare Gruppen aufweisenden Polymeren sowie den verzweigten Produkten bezieht sich diese Angabe auf die Gesamtzahl aller Kettenenden. Bei den nicht funktionalisierten Kettenenden handelt es sich sowohl um solche die überhaupt keine reaktive Gruppe aufweisen wie um solche, die zwar eine reaktive Gruppe aufweisen, diese aber im Zuge der Funktionalisierungsreaktion nicht umgesetzt wurden.

Der Begriff "polare Gruppe" ist dem Fachmann bekannt. Bei den polaren Gruppen kann es sich sowohl um protische als auch um aprotische polare Gruppen handeln. Die modifizierten Polyisobutene weisen somit einen hydrophoben Molekülteil aus einem Polyisobutenrest auf sowie einen Molekülteil, der zumindest einen gewissen hydrophilen Charakter aufweist, aus terminalen, polaren Gruppen. Bevorzugt handelt es sich um stark hydrophile Gruppen. Die Begriffe "hydrophil" sowie "hydrophob" sind dem Fachmann bekannt.

Polare Gruppen umfassen beispielsweise Sulfonsäurereste, Anhydride, Carboxylgruppen, Carbonsäureamide, OH-Gruppen, Polyoxyalkylengruppen, Aminogruppen, Epoxyde oder geeignete Silane, die auch noch geeignet substituiert sein können.

Geeignete Reaktionen zur Einführung von polaren Gruppen (Funktionalisierung) sind dem Fachmann grundsätzlich bekannt.

Grundsätzlich kann die Funktionalisierung der erfindungsgemäß eingesetzten Polyisobutene ein- oder mehrstufig durchgeführt werden.

In einer bevorzugten Ausführungsform erfolgt die Funktionalisierung des erfindungsgemäß eingesetzten Polyisobutens ein- oder mehrstufig und ist ausgewählt aus:
i) Umsetzung mit aromatischen Hydroxyverbindungen in Gegenwart eines Alkylierungskatalysators unter Erhalt von mit Polyisobutenen alkylierten aromatischen Hydroxyverbindungen,
ii) Umsetzung des Polyisobutens mit einer Peroxi-Verbindung unter Erhalt eines epoxidierten Polyisobutens,
iii) Umsetzung des Polyisobutens mit einem Alken, das eine elektrophil substituierte Doppelbindung aufweist (Enophil), in einer En-Reaktion,
iv) Umsetzung des Polyisobutens mit Kohlenmonoxid und Wasserstoff in Gegenwart eines Hydroformylierungskatalysators unter Erhalt eines hydroformylierten Polyisobutens,
v) Umsetzung des Polyisobutens mit Schwefelwasserstoff oder einem Thiol unter Erhalt eines mit Thiogruppen funktionalisiertem Polyisobutens,
vi) Umsetzung des Polyisobutens mit einem Silan in Gegenwart eines Silylierungskatalysators unter Erhalt eines mit Silylgruppen funktionalisierten Polyisobutens,
vii) Umsetzung des Polyisobutens mit einem Halogen oder einem Halogenwasserstoff unter Erhalt eines mit Halogengruppen funktionalisierten Polyisobutens,
viii) Umsetzung des Polyisobutens mit einem Boran und anschließender oxidativer Spaltung unter Erhalt eines hydroxylierten Polyisobutens,
ix) Umsetzung des Polyisobutens mit einer SO₃-Quelle, bevorzugt Acetylsulfat unter Erhalt eines Polyisobutens mit terminalen Sulfonsäuregruppen,
x) Umsetzung des Polyisobutens mit Stickoxiden und anschließende Hydrierung unter Erhalt eines Polyisobutens mit terminalen Aminogruppen.

### Zu i): Alkylierung von aromatischen Hydroxyverbindungen

Zur Derivatisierung kann das reaktive Polyisobuten mit einer aromatischen Hydroxyverbindung in Gegenwart eines Alkylierungskatalysators umgesetzt werden. Geeignete Katalysatoren und Reaktionsbedingungen dieser sogenannten Friedel-Crafts-Alkylierung sind beispielsweise in J. March, Advanced Organic Chemistry, 4. Auflage, Verlag John Wiley & Sons, S. 534-539 beschrieben, worauf hier Bezug genommen wird.

Die zur Alkylierung eingesetzte aromatische Hydroxyverbindung ist vorzugsweise ausgewählt unter phenolischen Verbindungen mit 1, 2 oder 3 OH-Gruppen, die gegebenenfalls wenigstens einen weiteren Substituenten aufweisen können. Bevorzugte weitere Substituenten sind C₁-C₈-Alkylgruppen und insbesondere Methyl und Ethyl. Bevorzugt sind insbesondere Verbindungen der allgemeinen Formel, 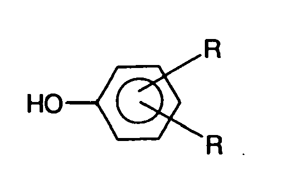 worin R¹ und R² unabhängig voneinander für Wasserstoff, OH oder CH₃ stehen. Besonders bevorzugt sind Phenol, die Kresol-Isomere, Katechol, Resorcinol, Pyrogallol, Fluoroglucinol und die Xylenol-Isomere. Insbesondere werden Phenol, o-Kresol und p-Kresol eingesetzt. Gewünschtenfalls können auch Gemische der zuvor genannten Verbindungen zur Alkylierung eingesetzt werden.

Der Katalysator ist vorzugsweise ausgewählt unter Lewis-sauren Alkylierungskatalysatoren, worunter im Rahmen der vorliegenden Anmeldung sowohl einzelne Akzeptoratome als auch Akzeptor-Ligand-Komplexe, Moleküle, etc. verstanden werden, sofern diese insgesamt (nach außen) Lewis-saure (Elektronenakzeptor-)Eigenschaften aufweisen. Dazu zählen beispielsweise AlCl₃, AlBr₃, BF₃, BF₃2 C₆H₅OH, BF₃[O(C₂H₅)₂]₂, TiCl₄, SnCl₄, AlC₂H₅Cl₂, FeCl₃, SbCl₅ und SbF₅. Diese Alkylierungskatalysatoren können gemeinsam mit einem Cokatalysator, beispielsweise einem Ether, eingesetzt werden. Geeignete Ether sind Di-(C₁-C₈-)alkylether, wie Dimethylether, Diethylether, Di-n-propylether, sowie Tetrahydrofuran, Di-(C₅-C₈-)cycloalkylether, wie Dicyclohexylether und Ether mit mindestens einem aromatischen Kohlenwasserstoffrest, wie Anisol. Wird zur Friedel-Crafts-Alkylierung ein Katalysator-Cokatalysator-Komplex eingesetzt, so liegt das Molmengenverhältnis von Katalysator zu Cokatalysator vorzugsweise in einem Bereich von 1:10 bis 10:1. Die Reaktion kann auch mit Protonensäuren wie Schwefelsäure, Phosphorsäure, Trifluormethansulfonsäure katalysiert werden. Organische Protonensäuren können auch in polymer gebundener Form vorliegen, beispielsweise als Ionenaustauscherharz.

Die Alkylierung kann lösungsmittelfrei oder in einem Lösungsmittel durchgeführt werden. Geeignete Lösungsmittel sind beispielsweise n-Alkane und deren Gemische und Alkylaromaten, wie Toluol, Ethylbenzol und Xylol sowie halogenierte Abkömmlinge davon.

Die Alkylierung wird bevorzugt bei Temperaturen zwischen -10°C und +100°C durchgeführt. Die Reaktion wird üblicherweise bei Atmosphärendruck durchgeführt, kann aber auch bei höheren oder geringeren Drücken durchgeführt werden.

Durch geeignete Wahl der Molmengenverhältnisse von aromatischer Hydroxyverbindung zu Polyisobuten und des Katalysators kann der erzielte Anteil an alkylierten Produkten und deren Alkylierungsgrad eingestellt werden. So werden z. B im Wesentlichen monoalkylierte Polyisobutenylphenole im Allgemeinen mit einem Überschuss an Phenol oder in Gegenwart eines Lewis-sauren Alkylierungskatalysators erhalten, wenn zusätzlich ein Ether als Cokatalysator eingesetzt wird.

Die Reaktion von Polyisobutenen mit Phenolen in Anwesenheit geeigneter Alkylierungskatalysatoren ist z. B. in US 5,300,701 und WO 02/26840 offenbart.

Zur weiteren Funktionalisierung kann man ein in Schritt i) erhaltenes Polyisobutenylphenol einer Umsetzung im Sinne einer Mannichreaktion mit wenigstens einem Aldehyd, beispielsweise Formaldehyd, und wenigstens einem Amin, das wenigstens eine primäre oder sekundäre Aminfunktion aufweist, unterziehen, wobei man eine mit Polyisobuten alkylierte und zusätzlich wenigstens teilweise aminoalkylierte Verbindung erhält. Es können auch Reaktions- und/oder Kondensationsprodukte von Aldehyd und/oder Amin eingesetzt werden. Die Herstellung solcher Verbindungen sind in WO 01/25 293 und WO 01/25 294 beschrieben, auf die hiermit im vollen Umfang Bezug genommen wird.

Des Weiteren kann ein in Schritt i) erhaltenes Polyisobutenylphenol mit Alkylenoxiden, bevorzugt Ethylenoxid, alkoxyliert werden.

### ii) Epoxidierung

Zur Funktionalisierung kann das reaktive Polyisobuten mit wenigstens einer Peroxiverbindung unter Erhalt eines epoxidierten Polyisobutens umgesetzt werden. Geeignete Verfahren zur Epoxidierung sind in J. March, Advanced Organic Chemistry, 4. Auflage, Verlag John Wiley & Sons, S.826-829 beschrieben, worauf hier Bezug genommen wird. Vorzugsweise wird als Peroxiverbindung wenigstens eine Persäure, wie m-Chlorperbenzoesäure, Perameisensäure, Peressigsäure, Trifluorperessigsäure, Perbenzoesäure und 3,5-Dinitroperbenzoesäure eingesetzt. Die Herstellung der Persäuren kann in situ aus den entsprechenden Säuren und H₂O₂ gegebenenfalls in Gegenwart von Mineralsäuren erfolgen. Weitere geeignete Epoxidierungsreagenzien sind beispielsweise alkalisches Wasserstoffperoxid, molekularer Sauerstoff und Alkylperoxide, wie tert.-Butylhydroperoxid. Geeignete Lösungsmittel für die Epoxidierung sind beispielsweise übliche, nicht polare Lösungsmittel.

Besonders geeignete Lösungsmittel sind Kohlenwasserstoffe wie Toluol, Xylol, Hexan oder Heptan.

Zur weiteren Funktionalisierung können die epoxidierten Polyisobutene, die in Schritt ii) erhalten werden, mit Ammoniak umgesetzt werden, wobei Polyisobutenaminoalkohole erhalten werden (EP-A 0 476 785).

### iii) En-Reaktion

Zur Funktionalisierung kann das reaktive Polyisobuten des Weiteren mit wenigstens einem Alken, das eine nukleophil-substituierte Doppelbindung aufweist, in einer En-Reaktionumgesetzt werden (siehe z. B. DE-A 4 319 672 oder H. Mach und P. Rath in "Lubrication Science II (1999), S. 175-185, worauf voll inhaltlich Bezug genommen wird). Bei der En-Reaktion wird ein als En bezeichnetes Alken mit einem Allyl-ständigen Wasserstoffatom mit einem nukleophilen Alken, dem sogenannten Enophil, in einer pericyc-lischen Reaktion, umfassend eine Kohlenstoff-Kohlenstoff-Bindungsknüpfung, eine Doppelbindungsverschiebung und einen Wasserstofftransfer umgesetzt. Vorliegend reagiert das reaktive Polyisobuten als En. Geeignete Enophile sind Verbindungen, wie sie auch als Dienophile in der Diels-Alder-Reaktion eingesetzt werden. Bevorzugt wird als Enophil Maleinsäureanhydrid eingesetzt. Dabei resultieren mit Bernsteinsäureanhydridgruppen (Succinanhydridgruppen) funktionalisierte Polyisobutene (Polyisobutenylbemsteinsäureanhydrid, PIBSA), wie in EP-A 0 156 310 offenbart.

Die En-Reaktion kann gegebenenfalls in Gegenwart einer Lewis-Säure als Katalysator durchgeführt werden. Geeignet sind beispielsweise Aluminiumchlorid und Ethylaluminiumchlorid.

Bei der Umsetzung wird eine neue α-Olefingruppe am Kettenende erzeugt. Zur weiteren Funktionalisierung kann man beispielsweise ein mit Bernsteinsäureanhydridgruppen derivatisiertes Polyisobuten einer Folgereaktion unterziehen, die ausgewählt ist unter:
a) Umsetzung mit wenigstens einem Amin unter Erhalt eines wenigstens teilweise mit Succinimidgruppen und/oder Succinamidgruppen funktionalisierten Polyisobutens,
b) Umsetzung mit wenigstens einem Alkohol unter Erhalt eines mit Succinestergruppen funktionalisierten Polyisobutens,
c) Umsetzung mit wenigstens einem Thiol unter Erhalt eines mit Succinthioestergruppen funktionalisierten Polyisobutens, und
d) Umsetzung mit Maleinsäureanhydrid zu einem Produkt mit zwei Bemsteinsäureanhydrid-Gruppen am Kettenende (sogenannte PIBBSA).
e) Hydrolyse unter Erhalt eines mit Bernsteinsäuregruppen funktionalisierten Polyisobutens, wobei die Bernsteinsäuregruppen auch in Salze umgewandelt werden können. Als Kationen in Salzen kommen vor allem Alkalimetallkationen, Ammonium-ionen sowie Alkylammoniumionen in Frage.

### Zu a) und b)

Die Bernsteinsäureanhydridgruppen können zur weiteren Derivatisierung beispielsweise mit polaren Reaktionspartnern wie Alkoholen oder Aminen umgesetzt werden. Bevorzugt handelt es sich bei geeigneten polaren Reaktionspartnern um primäre Alkohole ROH oder Primäre Amine RNH₂ bzw. sekundäre Amine RR'NH, wobei R für einen linearen oder verzweigten gesättigten Kohlenwasserstoffrest steht, der mindestens einen Substituenten ausgewählt aus der Gruppe OH, NH₂ oder NH₃⁺ und gegebenenfalls ein oder mehrere CH(O)-Gruppen trägt und gegebenenfalls nicht benachbarte -O- und/oder -NH- und/oder tertiäre -N- Gruppen aufweist, und R' unabhängig von R dieselbe Bedeutung hat. Hierbei können beide Carbonsäuregruppen des Bernsteinsäureanhydrids zur Umsetzung kommen oder auch nur eine, während die andere Carbonsäuregruppe als freie Säuregruppe oder als Salz vorliegt. Die obigen Substituenten können auch noch weiter, beispielsweise durch Alkoxylierung modifiziert werden.

Weitere Synthesevarianten für die Derivatisierung von Bernsteinsäureanhydridgruppen sind in den Anmeldungen mit den Aktenzeichen DE 101 251 58.0 und DE 101 476 50.7 genannt.

Es ist dem Fachmann auch bekannt, eine Bernsteinsäureanhydridgruppe unter geeigneten Bedingungen in eine Bernsteinsäureimid-Gruppe überzuführen.

Die Bernsteinsäureanhydridgruppen können durch im Stand der Technik bekannte Umsetzungen mit Oligo- oder Polyaminen zu Polyisobutenyl-Succinimid-Produkten umgesetzt werden. Geeignete Umsetzungen sind zum Beispiel in EP-A 0 264 247 und DE-A 101 23 553 offenbart.

Geeignete Oligo- oder Polyamine sind Polyalkylenpolyamine, wie Oligo- oder Polyalkylenimine, insbesondere Oligo- oder Polyalkylenimine, mit 1 bis 4 Kohlenstoffatomen in jeder Alkylengruppe, bevorzugt Poly- oder Oligoethylenimine, Poly- oder Oligopropylenimine oder Poly- oder Oligobutylenimine, besonders bevorzugt sind Oligoethylenimine, Oligopropylenimine oder Oligobutylenimine bestehend aus 2 bis 20, vorzugsweise 2 bis 10 und besonders bevorzugt 2 bis 6 Ethylen-, Propylen oder Butylenimineinheiten. Ganz besonders bevorzugt handelt es sich bei den vorstehend aufgeführten Oligoalkyleniminen um Oligoethylenimine. Des Weiteren sind die entsprechenden N-Alkylierungsprodukte der genannten Poly- oder Oligoalkylenimine geeignet, wobei mindestens eine Aminogruppe zur Reaktion mit den Bersteinsäureanhydridgruppen geeignet ist. Geeignete Verbindungen sind insbesondere n-Propylendiamin, 1,4-Butandiamin, 1,6-Hexandiamin, Diethylentriamin, Triethylenpentamin, Triethylentetramin und Polyethylenimine, sowie deren Alkylierungsprodukte, die wenigstens eine primäre oder sekundäre Aminofunktion aufweisen, zum Beispiel 3-(Dimethylamino)-n-propylamin, N,N-Dimethylethylendiamin, N,N-Diethylethylendiamin und N,N,N',N'-Tetramethyldiethylentriamin. Ebenfalls geeignet ist Ethylendiamin.

Als Polyethylenimine werden bevorzugt Polyethylenimin-Homopolymerisate eingesetzt, die in unvernetzer oder vernetzter Form vorliegen können. Die Polyethylenimin-Homopolymerisate können nach bekannten Verfahren, wie zum Beispiel in Römpps Chemie Lexikon, 8. Aufl. 1992, S. 3532 - 3533, oder in Ullmanns Enzyklopädie der Technischen Chemie, 4. Aufl. 1974, Bd. 8, S. 212 - 213 und der dort angegebenen Literatur beschrieben, hergestellt werden. Sie besitzen ein Molekulargewicht im Bereich von ca. 200 bis 1 000 000 g/mol. Dabei werden höhermolekulare Polymerisate durch Vernetzen mit polyfunktionellen Verbindungen erhalten. Bevorzugt werden Polyethylenimine mit einem Molekulargewicht bis zu 5000 g/mol eingesetzt.

Es ist möglich, dass beide Carboxylgruppen der als Anhydrid vorliegenden Bernsteinsäuregruppe mit den vorstehend erwähnten Oligo- oder Polyaminen zu den entsprechenden Amiden oder Imiden umgesetzt werden oder lediglich eine der beiden Carboxylgruppen.

### iv) Hydroformylierung

Zur Funktionalisierung kann man das reaktive Polyisobuten einer Umsetzung mit Kohlenmonoxid und Wasserstoff in Gegenwart eines Hydroformylierungskatalysators unterziehen, wobei ein hydroformyliertes Polyisobuten erhalten wird.

Geeignete Katalysatoren für die Hydroformylierung sind bekannt und umfassen vorzugsweise eine Verbindung oder einen Komplex eines Elements der VIII. Nebengruppe des Periodensystems, wie Co, Rh, Ir, Ru, Pd oder Pt. Zur Aktivitäts- und/oder Selektivitätsbeeinflussung werden vorzugsweise mit N- oder P-haltigen Liganden modifizierte Hydroformylierungskatalysatoren eingesetzt. Geeignete Salze dieser Metalle sind beispielsweise die Hydride, Halogenide, Nitrate, Sulfate, Oxide, Sulfide oder die Salze mit Alkyl- oder Arylcarbonsäuren oder Alkyl- oder Arylsulfonsäuren. Geeignete Komplexverbindungen weisen Liganden auf, die beispielsweise ausgewählt sind unter Halogeniden, Aminen, Carboxylaten, Acetylacetonat, Aryl- oder Alkylsulfonaten, Hydrid, CO, Olefinen, Dienen, Cycloolefinen, Nitrilen, N-haltigen Heterocyclen, Aromaten und Heteroaromaten, Ethern, PF₃, Phospholen, Phosphabenzolen sowie ein-, zwei- und mehrzähnigen Phosphin-, Phosphinit-, Phosphonit-, Phosphoramidit und Phosphitliganden.

Im Allgemeinen werden unter Hydroformylierungsbedingungen aus den jeweils eingesetzten Katalysatoren oder Katalysatorvorstufen katalytisch aktive Spezies der allgemeinen Formel HₓM_{y}(CO)_{z}L_{q} gebildet, worin M für ein Metall der VIII. Nebengruppe, L für einen Liganden und q, x, y, z für ganze Zahlen, abhängig von der Wertigkeit und Art des Metalls sowie der Bindigkeit des Liganden L, stehen.

Nach einer bevorzugten Ausführungsform werden die Hydroformylierungskatalysatoren in situ in dem für die Hydroformylierungsreaktion eingesetzten Reaktor hergestellt.

Eine andere bevorzugte Form ist die Verwendung eines Carbonylgenerators, bei dem vorgefertigtes Carbonyl z. B. an Aktivkohle adsorbiert wird und nur das desorbierte Carbonyl der Hydroformylierung zugeführt wird, nicht aber die Salzlösungen, aus denen das Carbonyl erzeugt wird.
Als Katalysatoren geeignete Rhodiumverbindungen oder -komplexe sind z. B. Rhodium(II)-und Rhodium(III)-salze, wie Rhodium(III)-chlorid, Rhodium(III)-nitrat, Rhodium(III)-sulfat, Kalium-Rhodiumsulfat, Rhodium(II)- bzw. Rhodium(III)-carboxylat, Rhodium(II)-und Rhodium(III)-acetat, Rhodium(III)-oxid, Salze der Rhodium(III)- säure, Trisammoniumhexachlororhodat(III) etc. Weiterhin eignen sich Rhodiumkomplexe, wie Rhodiumbiscarbonylacetylacetonat, Acetylacetonatobisethylenrhodium(I) etc.

Ebenfalls geeignet sind Rutheniumsalze oder -verbindungen. Geeignete Rutheniumsalze sind beispielsweise Ruthenium(III)chlorid, Ruthenium(IV)-, Ruthenium(VI)- oder Ruthenium(VIII)oxid, Alkalisalze der Rutheniumsauerstoffsäuren wie K₂RuO₄ oder KRuO₄ oder Komplexverbindungen, wie z. B. RuHCl(CO)(PPh₃)₃. Auch können die Metallcarbonyle des Rutheniums wie Trisrutheniumdodecacarbonyl oder Hexarutheniumoctadecacarbonyl, oder Mischformen, in denen CO teilweise durch Liganden der Formel PR₃ ersetzt sind, wie Ru(CO)₃(PPh₃)₂, verwendet werden.

Geeignete Cobaltverbindungen sind beispielsweise Cobalt(II)chlorid, Cobalt(II)sulfat, Cobalt(II)carbonat, Cobalt (II)nitrat, deren Amin- oder Hydratkomplexe, Cobaltcarboxylate, wie Cobaltformiat, Cobaltacetat, Cobaltethylhexanoat, Cobaltnaphthanoat, sowie der Cobalt-Caprolactamat-Komplex. Auch hier können die Carbonylkomplexe des Cobalts wie Dicobaltoctacarbonyl, Tetracobaltdodecacarbonyl und Hexacobalthexadecacarbonyl eingesetzt werden.

Die genannten und weitere geeignete Verbindungen sind im Prinzip bekannt und in der Literatur hinreichend beschrieben.

Geeignete Aktivierungsmittel, die zur Hydroformylierung eingesetzt werden können, sind z. B. Brönsted-Säuren, Lewis-Säuren, wie BF₃, AlCl₃, ZnCl₂, und Lewis-Basen.

Die Zusammensetzung des eingesetzten Synthesegases aus Kohlenmonoxid und Wasserstoff kann in weiten Bereichen variieren. Das molare Verhältnis von Kohlenmonoxid und Wasserstoff beträgt in der Regel etwa 5:95 bis 95:5, bevorzugt etwa 40:60 bis 60:40. Die Temperatur bei der Hydroformylierung liegt im Allgemeinen in einem Bereich von etwa 20 bis 200°C, bevorzugt etwa 50 bis 190°C. Die Reaktion wird in der Regel bei dem Partialdruck des Reaktionsgases bei der gewählten Reaktionstemperatur durchgeführt. Im Allgemeinen liegt der Druck in einem Bereich von etwa 1 bis 700 bar, bevorzugt 1 bis 300 bar.

Die Carbonylzahl der erhaltenen hydroformylierten Polyisobutene hängt vom zahlenmittleren Molekulargewicht Mₙ ab. Vorzugsweise weisen Produkte mit einem zahlenmittleren Molekulargewicht Mₙ von 10000 Dalton Carbonylzahlen von 2 bis 5,6 mg KOH/g, insbesondere 3,6 bis 5,6 mg KOH/g auf. Produkte mit einem zahlenmittleren Molekulargewicht Mₙ von 40000 Dalton weisen Carbonylzahlen von 0,5 bis 1,4 mg KOH/g, insbesondere 0,9 bis 1,4 mg KOH/g auf. Die Carbonylzahlen für Produkte mit anderen Molekulargewichten lassen sich durch Inter- oder Extrapolation bestimmen.

Vorzugsweise wird der überwiegende Teil der in dem eingesetzten mittelmolekularen, reaktiven Polyisobuten enthaltenen Doppelbindungen durch die Hydroformylierung in Aldehyde überführt. Durch Einsatz geeigneter Hydroformylierungskatalysatoren und/oder eines Überschusses an Wasserstoff im eingesetzten Synthesegas kann der überwiegende Teil der im Edukt enthaltenen, ethylenisch ungesättigten Doppelbindungen auch direkt in Alkohole umgewandelt werden (siehe z. B. DE-A 100 03 105). Dies kann auch in einer zweistufigen Funktionalisierung gemäß dem im Folgenden beschriebenen Reaktionsschritt B) erfolgen.

Die durch Hydroformylierung erhaltenen funktionalisierten Polyisobutene eignen sich vorteilhaft als Zwischenprodukte für die Weiterverarbeitung durch Funktionalisierung wenigstens eines Teils der in ihnen enthaltenen Aldehydfunktionen.

### A) Oxocarbonsäuren

Zur weiteren Funktionalisierung kann man die in Schritt iv) erhaltenen hydroformylierten Polyisobutene mit einem Oxidationsmittel unter Erhalt eines wenigstens teilweise mit Carboxygruppen funktionalisierten Polyisobutens umsetzen.

Für die Oxidation von Aldehyden zu Carbonsäuren können allgemein eine große Anzahl verschiedener Oxidationsmittel und -verfahren verwendet werden, die z. B. in J. March, Advanced Organic Chemistry, Verlag John Wiley & Sons, 4. Auflage, S. 701ff. (1992) beschrieben sind. Dazu zählen z. B. die Oxidation mit Permanganat, Chromat, Luftsauerstoff, etc. Die Oxidation mit Luft/Sauerstoff kann sowohl katalytisch in Gegenwart von Metallsalzen als auch in Abwesenheit von Katalysatoren erfolgen. Als Metalle werden bevorzugt solche verwendet, die zu einem Wertigkeitswechsel befähigt sind, wie Cu, Fe, Co, Mn, etc. Die Reaktion gelingt in der Regel auch in Abwesenheit eines Katalysators. Bei der Luftoxidation kann der Umsatz leicht über die Reaktionsdauer gesteuert werden.

Nach einer weiteren Ausführungsform wird als Oxidationsmittel eine wässrige Wasserstoffperoxidlösung in Kombination mit einer Carbonsäure, wie z. B. Essigsäure, verwendet. Die Säurezahl der erhaltenen Polyisobutene mit Carboxylfunktion hängt vom zahlenmittleren Molekulargewicht Mₙ ab. Vorzugsweise weisen Produkte mit einem zahlenmittleren Molekulargewicht Mₙ von 10000 Dalton Säurezahlen von 2 bis 5,6 mg KOH/g, insbesondere 3,6 bis 5,6 mg KOH/g auf. Produkte mit einem zahlenmittleren Molekulargewicht Mₙ von 40000 Dalton weisen Säurezahlen von 0,5 bis 1,4 mg KOH/g, insbesondere 0,9 bis 1,4 mg KOH/g auf. Die Säurezahlen für Produkte mit anderen Molekulargewichten lassen sich durch Inter- oder Extrapolation bestimmen.

### B) Oxoalkohole

Nach einer weiteren geeigneten Ausführungsform können die in Schritt iv) erhaltenen hydroformylierten Polyisobutene einer Umsetzung mit Wasserstoff in Gegenwart eines Hydrierkatalysators unter Erhalt eines wenigstens teilweise mit Alkoholgruppen funktionalisierten Polyisobutens unterzogen werden.

Geeignete Hydrierungskatalysatoren sind im allgemeinen Übergangsmetalle wie Cr, Mo, W, Fe, Rh, Co, Ni, Pd, Pt, Ru, etc., oder deren Mischungen, die zur Erhöhung der Aktivität und Stabilität auf Trägern, wie Aktivkohle, Aluminiumoxid, Kieselgur, etc., aufgebracht werden können. Zur Erhöhung der katalytischen Aktivität können Fe, Co, und bevorzugt Ni auch in Form der Raney-Katalysatoren als Metallschwamm mit einer sehr großen Oberfläche verwendet werden.

Die Hydrierung der Oxo-Aldehyde aus Stufe iv) erfolgt in Abhängigkeit von der Aktivität des Katalysators vorzugsweise bei erhöhten Temperaturen und erhöhtem Druck. Bevorzugt liegt die Reaktionstemperatur bei etwa 80 bis 150°C und der Druck bei etwa 50 bis 350 bar.

Die Alkoholzahl der erhaltenen Polyisobutene mit Hydroxygruppen hängt vom zahlenmittleren Molekulargewicht Mₙ ab. Vorzugsweise weisen Produkte mit einem zahlenmittleren Molekulargewicht Mₙ von 10000 Dalton Alkoholzahlen von 2 bis 5,6 mg KOH/g, insbesondere 3,6 bis 5,6 mg KOH/g auf. Produkte mit einem zahlenmittleren Molekulargewicht Mₙ von 40000 Dalton weisen Alkoholzahlen von 0,5 bis 1,4 mg KOH/g, insbesondere 0,9 bis 1,4 mg KOH/g auf. Die Alkoholzahlen für Produkte mit anderen Molekulargewichten lassen sich durch Inter- oder Extrapolation bestimmen.

Die mit Alkoholgruppen funktionalisierten Polyisobutene können zusätzlich mit Alkylenoxiden, bevorzugt Ethylenoxid, alkoxyliert werden.

### C) Aminsynthese

Nach einer weiteren geeigneten Ausführungsform werden die in Schritt iv) erhaltenen hydroformylierten Polyisobutene zur weiteren Funktionalisierung einer Umsetzung mit Wasserstoff und Ammoniak oder einem primären oder sekundären Amin in Gegenwart eines Aminierungskatalysators unter Erhalt eines wenigstens teilweise mit Amingruppen funktionalisierten Polyisobutens unterzogen.

Geeignete Aminierungskatalysatoren sind die zuvor in Stufe B) beschriebenen Hydrierungskatalysatoren, bevorzugt Kupfer, Cobalt oder Nickel, die in Form der Raney-Metalle oder auf einem Träger eingesetzt werden können. Weiter eignen sich auch Platinkatalysatoren.

Bei der Aminierung mit Ammoniak werden aminierte Polyisobutene mit primären Aminofunktionen erhalten. Zur Aminierung geeignete primäre und sekundäre Amine sind Verbindungen der allgemeinen Formeln R-NH₂ und RR'NH, worin R und R' unabhängig voneinander beispielsweise für C₁-C₁₀-Alkyl, C₆-C₂₀-Aryl, C₇-C₂₀-Arylalkyl, C₇-C₂₀-Alkylaryl oder Cycloalkyl stehen.

Die Aminzahl der erhaltenen Polyisobutene mit Aminofunktion hängt vom zahlenmittleren Molekulargewicht Mₙ ab. Vorzugsweise weisen Produkte mit einem zahlenmittleren Molekulargewicht Mₙ von 10000 Dalton Aminzahlen von 2 bis 5,6 mg KOH/g, insbesondere 3,6 bis 5,6 mg KOH/g auf. Produkte mit einem zahlenmittleren Molekulargewicht Mₙ von 40000 Dalton weisen Aminzahlen von 0,5 bis 1,4 mg KOH/g, insbesondere 0,9 bis 1,4 mg KOH/g auf. Die Aminzahlen für Produkte mit anderen Molekulargewichten lassen sich durch Inter- oder Extrapolation bestimmen.

### v) Addition von Schwefelwasserstoff und Thiolen

Zur Funktionalisierung kann das reaktive Polyisobuten einer Umsetzung mit Schwefelwasserstoff oder Thiolen, wie Alkyl- oder Arylthiole, Hydroxymercaptanen, Aminomercaptanen, Thiocarbonsäuren oder Silanthiolen, unter Erhalt eines mit Thiogruppen funktionalisierten Polyisobutens unterzogen werden.
Geeignete Hydro-Alkylthio-Additionen sind in J. March, Advanced Organic Chemistry, 4. Auflage, Verlag John Wiley & Sons, S. 766-767 beschrieben, worauf hier in vollem Umfang Bezug genommen wird. Die Umsetzung kann in der Regel sowohl in Abwesenheit als auch in Anwesenheit von Initiatoren sowie in Anwesenheit von elektromagnetischer Strahlung erfolgen. Bei der Addition von Schwefelwasserstoff werden mit Thiolgruppen funktionalisierte Polyisobutene erhalten. Bei der Umsetzung mit Thiolen in Abwesenheit von Initiatoren werden in der Regel die Markovnikov-Additionsprodukte an die Doppelbindung erhalten. Geeignete Initiatoren der Hydro-Alkylthio-Addition sind beispielsweise Protonen- und Lewis-Säuren, wie konzentrierte Schwefelsäure oder AlCl₃. Geeignete Initiatoren sind weiterhin solche, die zur Ausbildung von freien Radikalen befähigt sind. Bei der Hydro-Alkylthio-Addition in Gegenwart dieser Initiatoren werden in der Regel die Anti-Markovnikov-Additionsprodukte erhalten. Die Reaktion kann weiterhin in Gegenwart von elektromagnetischer Strahlung einer Wellenlänge von 10 bis 400 nm, bevorzugt 200 bis 300 nm, erfolgen.

### vi) Silylierung

Zur Funktionalisierung kann das reaktive Polyisobuten einer Umsetzung mit einem Silan in Gegenwart eines Silylierungskatalysators unter Erhalt eines mit Silylgruppen funktionalisierten Polyisobutens unterzogen werden.

Geeignete Hydrosilylierungskatalysatoren sind z. B. Übergangsmetallkatalysatoren, wobei das Übergangsmetall vorzugsweise ausgewählt ist unter Pt, Pd, Rh, Ru und Ir. Zu den geeigneten Platinkatalysatoren zählt beispielsweise Platin in feinverteilter Form ("Platinmohr"), Platinchlorid und Platinkomplexe wie Hexachloroplatinsäure. Geeignete Rhodiumkatalysatoren sind beispielsweise (RhCl(P(C₆H₅)₃)₃) und RhCl₃. Geeignet sind weiterhin RuCl₃ und IrCl₃. Geeignete Katalysatoren sind weiterhin Lewis-Säuren wie AlCl₃ oder TiCl₄ sowie Peroxide. Dabei kann es von Vorteil sein, Kombinationen oder Gemische der zuvor genannten Katalysatoren einzusetzen.
Geeignete Silane sind z. B. halogenierte Silane, wie Trichlorsilan, Methyldichlorsilan, Dimethylchlorsilan und Trimethylsiloxydichlorsilan; Alkoxysilane, wie Trimethoxysilan, Trimethoxysilan, Methyldimethoxysilan, Phenyldimethoxysilan, 1,3,3,5,5,7,7-Heptamethyl-1,1-dimethoxytetrasiloxan sowie Acyloxysilane.

Die Reaktionstemperatur bei der Silylierung liegt vorzugsweise in einem Bereich von 0 bis 120°C, besonders bevorzugt 40 bis 100°C. Die Reaktion wird üblicherweise unter Normaldruck durchgeführt, kann jedoch auch bei erhöhten Drücken, z. B. im Bereich von etwa 1,5 bis 20 bar, oder verringerten Drücken, z. B. 200 bis 600 mbar, erfolgen.

Die Reaktion kann ohne Lösungsmittel oder in Gegenwart eines geeigneten Lösungsmittels erfolgen. Als Lösungsmittel bevorzugt sind beispielsweise Toluol, Tetrahydrofuran und Chloroform.

### vii) Addition von Halogenwasserstoff oder Halogen

Zur Funktionalisierung kann das reaktive Polyisobuten einer Umsetzung mit Halogenwasserstoff oder einem Halogen unter Erhalt eines mit Halogengruppen funktionalisierten Polyisobutens unterzogen werden.

Geeignete Reaktionsbedingungen der Hydro-Halo-Addition werden in J. March, Advanced Organic Chemistry, 4. Auflage, Verlag John Wiley & Sons, S. 758-759 beschrieben, worauf hier Bezug genommen wird. Zur Addition von Halogenwasserstoff eignen sich prinzipiell HF, HCl, HBr und HI. Die Addition von HI, HBr und HF kann in der Regel bei Raumtemperatur erfolgen, wohingegen zur Addition von HCl in der Regel erhöhte Temperaturen eingesetzt werden.

Die Addition von Halogenwasserstoffen kann prinzipiell in Abwesenheit oder in Anwesenheit von Initiatoren oder von elektromagnetischer Strahlung erfolgen. Bei der Addition in Abwesenheit von Initiatoren, speziell von Peroxiden, werden in der Regel die Markovnikov-Additionsprodukte erhalten. Unter Zusatz von Peroxiden führt die Addition von HBr in der Regel zu Anti-Markovnikov-Produkten.
Die Halogenierung von Doppelbindungen wird in J. March, Advanced Organic Chemistry, 4. Auflage, Verlag John Wiley & Sons, S. 812-814 beschrieben, worauf hier Bezug genommen wird. Zur Addition von Cl, Br und I können die freien Halogene eingesetzt werden. Zum Erhalt von gemischt-halogenierten Verbindungen ist der Einsatz von Interhalogen-Verbindungen bekannt. Zur Addition von Fluor werden in der Regel Fluor-haltige Verbindungen, wie CoF₃, XeF₂ und Mischungen von PbO₂ und SF₄ eingesetzt. Brom addiert in der Regel bei Raumtemperatur in guten Ausbeuten an Doppelbindungen. Zur Addition von Chlor können neben dem freien Halogen auch Chlor-haltige Reagenzien, wie SO₂Cl₂, PCl₅ etc. eingesetzt werden.

Wird zur Halogenierung Chlor oder Brom in Gegenwart von elektromagnetischer Strahlung eingesetzt, so erhält man im Wesentlichen die Produkte der radikalischen Substitution an der Polymerkette und nicht oder nur in untergeordnetem Maß Additionsprodukte an die endständige Doppelbindung.

### viii) Hydroborierung

Zur Funktionalisierung kann man das reaktive Polyisobuten einer Umsetzung mit einem (gegebenenfalls in situ erzeugten) Boran unterziehen, wobei ein hydroxyliertes Polyisobuten erhalten wird.

Geeignete Verfahren zur Hydroborierung sind in J. March, Advanced Organic Chemistry, 4. Auflage, Verlag John Wiley & Sons, S. 783-789 beschrieben, worauf hiermit Bezug genommen wird. Geeignete Hydroborierungsreagenzien sind beispielsweise Diboran, das in der Regel in situ durch Umsetzung von Natriumborhydrid mit BF₃-Etherat erzeugt wird, Diisamylboran (Bis-[3-methylbut-2-yl]boran), 1,1,2-Trimethylpropylboran, 9-Borbicyclo[3.3.1]nonan, Diisocampheylboran, die durch Hydroborierung der entsprechenden Alkene mit Diboran erhältlich sind, Chlorboran-Dimethylsulfid, Alkyldichlorborane oder H₃B-N(C₂H₅)₂.

Üblicherweise führt man die Hydroborierung in einem Lösungsmittel durch. Geeignete Lösungsmittel für die Hydroborierung sind beispielsweise acyclische Ether wie Diethylether, Methyl-tert.-butylether, Dimethoxyethan, Diethylenglykoldimethylether, Triethylenglykoldimethylether, cyclische Ether wie Tetrahydrofuran oder Dioxan sowie Kohlenwasserstoffe wie Hexan oder Toluol oder Gemische davon. Die Reaktionstemperatur wird in der Regel von der Reaktivität des Hydroborierungsmittels bestimmt und liegt normalerweise zwischen dem Schmelz- und Siedepunkt des Reaktionsgemisches, vorzugsweise im Bereich von 0°C bis 60°C.

Üblicherweise setzt man das Hydroborierungsmittel im Überschuss bezogen auf das Alken ein. Das Boratom addiert sich vorzugsweise an das weniger substituierte und somit sterisch weniger gehinderte Kohlenstoffatom.

Üblicherweise werden die gebildeten Alkylborane nicht isoliert, sondern durch nachfolgende Umsetzung direkt in die Wertprodukte überführt. Eine sehr bedeutsame Umsetzung der Alkylborane ist die Reaktion mit alkalischem Wasserstoffperoxid unter Erhalt eines Alkohols, der vorzugsweise formal der anti-Markovnikov-Hydratisierung des Alkens entspricht. Des Weiteren können die erhaltenen Alkylborane einer Umsetzung mit Brom in Gegenwart von Hydroxid-Ionen unter Erhalt des Bromids unterzogen werden.

### ix) Umsetzung mit einer SO₃-Quelle

Zur Funktionalisierung kann das reaktive Polyisobuten des Weiteren mit einer SO₃-Quelle umgesetzt werden, wobei ein Polyisobuten mit terminalen Sulfonsäuregruppen gebildet wird.

Die mit Sulfonsäuregruppen funktionalisierten Polyisobutene können durch Umsetzung der reaktiven Polyisobutene mit einer SO₃-Quelle hergestellt werden. Geeignete SO₃-Quellen sind ein Mischung aus Schwefeltrioxid und Luft, Schwefeltrioxid-Hydrate, Schwefeltrioxidaminkomplexe, Schwefeltrioxidetherkomplexe, Schwefeltrioxidphosphatkomplexe, Acetylsulfat, eine Mischung von Schwefeltrioxid und Essigsäure, Sulfaminsäure, Alkylsulfate oder Chlorsulfonsäuren. Die Reaktion kann entweder in Substanz oder in einem beliebigen inerten wasserfreien Lösungsmittel erfolgen. Geeignete Reaktionstemperaturen liegen im Bereich von -30°C bis +200°C und sind von dem eingesetzten Sulfonierungsreagenz abhängig. Beispielsweise erfolgt eine Sulfonierung mit Acetylsulfat bei niedrigen Temperaturen und erhöhte Temperaturen sollten vermieden werden, da sonst eine Zersetzung des Produktes eintreten kann. Das Sulfonierungsreagenz wird im Allgemeinen in einem Molverhältnis zu Polyisobuten von 1:1 bis 2:1 eingesetzt. Bevorzugt wird Acetylsulfat oder eine Mischung von Schwefelsäure und Essigsäureanhydrid, wobei Acetylsulfat in situ gebildet wird, eingesetzt, wobei direkt das mit Sulfonsäuregruppen funktionalisierte Polyisobuten gebildet wird. Andere der genannten Sulfonierungsreagenzien, z. B. die Mischung aus Schwefeltrioxid und Sauerstoff, können zunächst ein intermediäres Sulton bilden, das zur gewünschten Sulfonsäure hydrolysiert werden muss. Ein Verfahren zur Herstellung von mit Sulfonsäuregruppen funktionalisierten Polyisobutenen ist beispielsweise in WO 01/70830 offenbart.

### x) Funktionalisierung mit Aminogruppen

Zur Funktionalisierung kann das reaktive Polyisobuten mit Stickoxiden umgesetzt werden, wobei nach anschließender Hydrierung Polyisobutene mit terminalen Aminogruppen erhalten werden.

Geeignete Stickoxide sind z. B. NO, NO₂, N₂O₃, N₂O₄, Mischungen dieser Stickoxide untereinander und Mischungen dieser Stickoxide mit Sauerstoff. Besonders bevorzugt sind Mischungen von NO oder NO₂ mit Sauerstoff. Des Weiteren können die Stickoxide zusätzlich Inertgase, z. B. Stickstoff, enthalten. Die Umsetzung der Polyisobutene mit den Stickoxiden erfolgt im Allgemeinen bei einer Temperatur von -30 bis +150°C in einem inerten organischen Lösungsmittel. Die erhaltenen Produkte werden anschließend hydriert, bevorzugt durch katalytische Hydrierung mit Wasserstoff in Anwesenheit von Hydrierkatalysatoren. Die Hydrierung wird im Allgemeinen in einem Temperaturbereich von 20 bis 250°C durchgeführt, in Abhängigkeit von dem eingesetzten Reduktionssystem. Der Hydrierdruck beträgt in der katalytischen Hydrierung im Allgemeinen 1 bar bis 300 bar. Ein Verfahren zur Herstellung von mit Aminogruppen terminierten Polymerisaten ist z. B. in WO 97/03946 offenbart.

### Fasern, Folien, Formkörper aufgebaut aus der erfindungsgemäßen Polymerzusammensetzung

Die erfindungsgemäßen Polymerzusammensetzungen können beliebig weiterverarbeitet werden. Ein weiterer Gegenstand der vorliegenden Anmeldung sind daher Fasern, Folien und Formkörper, aufgebaut aus der erfindungsgemäßen Polymerzusammensetzung.

Der Begriff "Fasern" betrifft gemäß der vorliegenden Anmeldung Fasern aller Längen und Durchmesser. Unter den Begriff "Fasern" fallen gemäß der vorliegenden Anmeldung ebenfalls "Filamente" und "Stapelfasern". Des Weiteren sind unter dem Begriff "Fasern" sowohl die einzelnen Fasern selbst, aus den Fasern gebildete Garne, Gewebe, Maschenwaren, geknüpfte Teppiche oder Vlies zu verstehen. Verfahren zur Herstellung von Fasern oder daraus gebildeten Garnen, Geweben, Maschenwaren, Teppichen oder Vlies aus den erfindungsgemäßen Polymerszusammensetzungen sind dem Fachmann bekannt.

Unter dem Begriff "Folien" sind gemäß der vorliegenden Anmeldung Folien beliebiger Dicke sowie deren Verarbeitungsprodukte zu verstehen. Geeignete Verfahren zur Herstellung und Verarbeitung der Folien sind dem Fachmann bekannt.

Unter dem Begriff "Formkörper" sind beliebige aus den erfindungsgemäßen Polymerzusammensetzungen herstellbare Formkörper, Formteile, Halbzeuge, Platten und geblasene Formen zu verstehen, die mittels Extrusion, Spritzguss, Blasformen, Rotorformen und ggf. Kalandrieren hergestellt werden.

### Herstellung der Polymerzusammensetzungen

Ein weiterer Gegenstand der vorliegenden Anmeldung ist ein Verfahren zur Herstellung der erfindungsgemäßen Polymerzusammensetzungen, wobei man das hydrophobe Polymer, insbesondere das Polyolefin, oder die zur Herstellung des hydrophoben Polymers, insbesondere des Polyolefins, eingesetzten Ausgangsstoffe mit wenigstens einem mit terminalen, polaren Gruppen modifizierten Polyisobuten in Kontakt bringt.

Zur Herstellung des hydrophoben Polymers, insbesondere des Polyolefins, geeignete Ausgangsstoffe (Monomere) wurden bereits vorstehend genannt. Verfahren zur Herstellung von hydrophoben Polymeren, insbesondere von Polyolefinen, sind dem Fachmann bekannt.

Die Herstellung der Polymerzusammensetzungen bzw. der aus den erfindungsgemäßen Polymerzusammensetzungen aufgebauten Fasern, Folien und Formkörper kann auf verschiedene Weise erfolgen:
a) Herstellung der hydrophoben Polymere, insbesondere der Polyolefine, in Anwesenheit der erfindungsgemäß eingesetzten modifizierten Polyisobutene
   Bei der Herstellung der hydrophoben Polymere, insbesondere der Polyolefine, in Anwesenheit der erfindungsgemäß eingesetzten modifizierten Polyisobutene werden die Polyisobutene im Allgemeinen nicht als Copolymer in das hydrophobe Polymer, insbesondere das Polyolefin, eingebaut, sondern liegen lediglich in feinverteilter Form in der Polymermatrix vor. Es ist jedoch auch denkbar, dass geeignet modifizierte Polyisobutene als Copolymer fest in das hydrophobe Polymer, bevorzugt in das Polyolefin eingebaut werden. In jedem Fall werden die modifizierten Polyisobutene dabei nicht lediglich auf die Oberfläche des Polyolefins aufgebracht, sondern sind fest in der gesamten Polymermasse verankert. Somit können zur weiteren Modifikation eingesetzte Substanzen, z. B. Farbstoffe nicht nur mit der Oberfläche der Polyisobutene verknüpft werden, sondern auch mit der gesamten Polymermasse. So sind z. B. eingefärbte Polymerzusammensetzungen erhältlich, die zu den genannten Fasern, Folien und Formkörpern weiterverarbeitet werden können. Dabei sind die Farbstoffe fest in den Polymerzusammensetzungen verankert, so dass ein Auswaschen der Farbstoffe weitgehend vermieden wird. Geeignete Verfahren sind dem Fachmann bekannt.
b) Zugabe der modifizierten Polyisobutene bei der Verarbeitung der eingesetzten hydrophoben Polymere, insbesondere Polyolefine
   Es ist ebenfalls möglich, die erfindungsgemäß eingesetzten modifizierten Polyisobutene bei der Verarbeitung der hydrophoben Polymere, insbesondere Polyolefine, zu Fasern, Folien und Formkörpern zuzugeben, z.B. bei der Extrusion, dem Spritzguss, dem Blas- oder Rotorformen der hydrophoben Polymere, insbesondere Polyolefine. Bei dieser Verfahrensvariante sind die erfindungsgemäßen Polymerzusammensetzungen Mischungen zwischen den eingesetzten hydrophoben Polymeren, insbesondere Polyolefinen, und den modifizierten Polyisobutenen. Auch in diesem Falle wird nicht lediglich eine Modifizierung der Oberfläche der hydrophoben Polymere, insbesondere Polyolefine, erreicht, sondern eine Verteilung des modifizierten Polyisobutens innerhalb der hydrophoben Polymere, insbesondere Polyolefine. Geeignete Verfahren sind dem Fachmann bekannt.
   In einem Verfahren zur Herstellung der erfindungsgemäßen Formkörper, Folien und Fasern wird das modifizierte Polyisobuten während der Verarbeitung zu Formkörpern, Folien und Fasern mit dem hydrophoben Polymer in Kontakt gebracht.
c) Aufbringen der modifizierten Polyisobutene
   Schließlich ist es möglich, zunächst Fasern, Folien und Formkörper aus hydrophoben Polymeren, insbesondere Polyolefinen, nach dem Fachmann bekannten Verfahren herzustellen und daran anschließend die erfindungsgemäß eingesetzten modifizierten Polyisobutene nach dem Fachmann bekannten Verfahren aufzubringen. In diesem Falle wird lediglich die Oberfläche der Fasern, Folien und Formkörper mit Hilfe der modifizierten Polyisobutene modifiziert. Somit wird beispielsweise bei einer Einfärbung der so modifizierten hydrophoben Polymere, insbesondere Polyolefine, lediglich die Oberfläche der Fasern, Folien und Formkörper eingefärbt.
   In einem Verfahren zur Herstellung der erfindungsgemäßen Fasern, Folien und Formkörper wird das modifizierte Polyisobuten auf die aus Polyolefin aufgebauten Fasern, Folien und Formkörper aufgebracht.
   Während die modifizierten Polyisobutene bei den Verfahrensvarianten a) und b) im Allgemeinen in Substanz, d. h. ohne Zugabe von Lösungsmittel, mit den hydrophoben Polymeren, insbesondere Polyolefinen, in Kontakt gebracht werden, erfolgt die Aufbringung der erfindungsgemäß eingesetzten modifizierten Polyisobutene bei der Verfahrensvariante c) bevorzugt aus einer Lösung, Emulsion oder Dispersion der erfindungsgemäß eingesetzten modifizierten Polyisobutene in Lösungsmitteln, bevorzugt aus wässrigen Systemen, durch Aufbringen in flüssiger Form, durch Versprühen, als Spray, Aerosol oder in der Dampfphase.
   Die erfindungsgemäßen Polymerzusammensetzungen enthalten im Allgemeinen 85 bis 99,9 Gew.-%, bevorzugt 90 bis 99,8 Gew.-%, besonders bevorzugt 95 bis 99,5 Gew.-% des hydrophoben Polymers, insbesondere Polyolefins, und im Allgemeinen 0,1 bis 15 Gew.-%, bevorzugt 0,2 bis 10 Gew.-%, besonders bevorzugt 0,5 bis 5 Gew.-% des erfindungsgemäß eingesetzten Polyisobutenderivates. Des Weiteren können die erfindungsgemäßen Polymerzusammensetzungen gegebenenfalls weitere Komponenten wie andere, mit hydrophoben Polymeren, insbesondere Polyolefinen mischbare Polymere, die beispielsweise zur Verbesserung der technologischen Eigenschaften zugesetzt werden, und Verarbeitungshilfsmittel, Stabilisatoren wie UV-Absorber, Antioxidantien und Radikalfänger (beispielsweise HALS-Amine), Antistatika, Flammschutzmittel, Nukleierungsmittel, Füllstoffe, sofern sie nicht mit den erfindungsgemäßen Substanzen unerwünschte Verbindungen eingehen, enthalten. Details sind dem Fachmann bekannt oder können beispielsweise in "Ullmanns Encyclopedia (of Technical Chemistry), 6^{th} Edition, 2000 Electronic Release" im Kapitel "Polyolefine" und den dort angegebenen Referenzen nachgelesen werden.
   Mit Hilfe der erfindungsgemäßen Polymerzusammensetzungen werden die Nachteile der unmodifizierten hydrophoben Polymere, insbesondere Polyolefine, behoben. Die erfindungsgemäßen Polymerzusammensetzungen bzw. Fasern, Folien und Formkörper aufgebaut aus den erfindungsgemäßen Polymerzusammensetzungen sind aus wässrigen Bädern färbbar, direkt lackier- oder bedruckbar und mit anderen Materialien verklebbar. Somit sind die erfindungsgemäßen Polymerzusammensetzungen hervorragend für technische und Automobil-Textilien und Bekleidungsfasern, speziell im Sport- und Outdoor-Bekleidungssektor sowie als färb- und bedruckbare Fasern zur Herstellung textiler Flächengebilde, wie Teppichen oder Vliesen, und für Formteile und Halbzeuge für den Automobil-, Bau- und Haushaltsbereich, als Gehäuse verschiedenster Geräte, für Verpackungen, technische Anwendungen geeignet.

### Einfärben der erfindungsgemäßen Polymerzusammensetzung

In einem Verfahren zum Einfärben der erfindungsgemäßen Polymerszusammensetzung oder der erfindungsgemäßen Fasern, Folien und Formkörper wird eine Flotte enthaltend mindestens einen Farbstoff mit der Polymerzusammensetzung oder den Fasern, Folien und Formkörpern in Kontakt gebracht.

Die Zusammensetzung der Flotte ist dabei abhängig von dem verwendeten Färbeverfahren sowie von dem eingesetzten Farbstoff. Die Auswahl geeigneter Farbstoffe richtet sich nach den Anforderungen in Bezug auf beispielsweise Gebrauchsechtheiten, Farbtiefe und Brillanz der Färbung, wodurch die Wahl der Funktionalisierung des erfindungsgemäß eingesetzten modifizierten Polyisobutens bestimmt wird. So wird dann eine gute Haftung des Farbstoffs in der Polymerzusammensetzung bzw. den Fasern, Folien und Formkörpern aufgebaut aus der Polymerzusammensetzung erzielt, wenn die funktionellen Gruppen der eingesetzten Farbstoffe zu den terminalen, polaren Gruppen der eingesetzten Polyisobutene komplementär sind.

Als "komplementäre Gruppe" wird im Rahmen der vorliegenden Anmeldung ein Paar von funktionellen Gruppen verstanden, die unter Ausbildung einer kovalenten Bindung, Salzbildung durch elektrostatische Wechselwirkung, Wasserstoffbrücken-Bindung oder van-der-Waals-Wechselwirkungen miteinander reagieren können.

Als Farbstoffe sind grundsätzlich alle bekannten Farbstoffe ausgewählt aus kationischen Farbstoffen, anionischen Farbstoffen, Beizenfarbstoffen, Direkt- bzw. substantiven Farbstoffen, Dispersionsfarbstoffen, Entwicklungsfarbstoffen, Küpenfarbstoffen, Metallkomplexfarbstoffen, Reaktivfarbstoffen, Schwefelfarbstoffen Farbstoffen geeignet. Dabei ist der Einsatz der verschiedenen Farbstoffe unter anderem abhängig von dem zur Modifizierung der Polyolefine eingesetzten modifizierten Polyisobuten.

Des Weiteren ist eine Einfärbung mit so genannten Pigmentfarbstoffen möglich. Diese können gemeinsam mit einem Bindemittel oder ohne Bindemittel, was bevorzugt ist, eingesetzt werden.

Weiterhin können geeignete Kombinationen von Farbstoffen eingesetzt werden, wobei der Fachmann bevorzugt gut kombinierbare Farbstoffe einsetzt. Welche Farbstoffe gut kombinierbar sind ist dem Fachmann bekannt.

Mit dem Färbeverfahren werden eingefärbte Polymerzusammensetzungen erhalten. Mit Hilfe des erfindungsgemäßen Färbeverfahrens können gute Farbtiefen, eine hohe Brillanz und gute Gebrauchsechtheiten, unter anderem Licht- und Waschechtheiten, erzielt werden.

In dem Verfahren zur Einfärbung der erfindungsgemäßen Polymerzusammensetzung oder der erfindungsgemäßen Fasern, Folien und Formkörper (im Folgenden Substrat genannt) können neben dem Substrat und dem mindestens einen Farbstoff auch geeignete Hilfsmittel wie Dispergier-, Egalisiermittel, pH-Regler (auch Puffer), Emulgiermittel, Schaumdämpfer und Entschäumer eingesetzt werden sowie Tenside. Nach der Färbung können zur Erhöhung der Gebrauchsechtheiten Detergentien bzw. Waschmittel sowie ggf. reduktiv oder oxidativ wirkende Nachreinigungsmittel eingesetzt werden.

Die Färbung kann z. B. im Ausziehverfahren erfolgen. Beim Färben im Ausziehverfahren ist es vorteilhaft, bei Badtemperaturen von 80 °C bis 140 °C, besonders bevorzugt von 100 °C bis 130 °C, zu färben. Daneben sind auch kontinuierliche Färbeverfahren, die dem Fachmann bekannt sind, möglich. Insbesondere ist die Einfärbung mittels Flottenauftrag im Foulard und anschließendes Trocknen/Fixieren vorteilhaft.

Beim Färben mit Küpenfarbstoffen können diese vorteilhaft direkt in der Pigmentform eingesetzt werden, d. h. ohne Reduktion zum Leukofarbstoff und anschließende Oxidation. Besonders vorteilhaft ist die Verwendung von flüssigen Formulierungen, die Küpenfarbstoffe in dispergierter Form enthalten. Die Färbetemperatur sollte im Allgemeinen höher als bei der Färbung von Baumwolle sein, bevorzugt zwischen 100 bis 130 °C.

Im Folgenden sind die nach einer Funktionalisierung gemäß einer der Schritte i) bis x) erhaltenen modifizierten Polyisobutene aufgeführt sowie die zur Anfärbung der diese modifizierten Polyisobutene enthaltenden Polymerzusammensetzungen geeigneten Farbstoffe:

### i) Alkylierung von aromatischen Hydroxyverbindungen

Bei der Alkylierung von aromatischen Hydroxyverbindungen, insbesondere von Phenolen, werden Polyisobutenylphenole erhalten. Dabei handelt es sich um modifizierte Polyisobutene, die mit Dispersions-, Direkt-, Küpenfarbstoffen, Metallkomplexfarbstoffen, Reaktivfarbstoffen, Schwefelfarbstoffen und substantiven sowie im Falle einer Substitution mit anionischen bzw. kationischen funktionellen Gruppen auch mit kationischen bzw. anionischen Farbstoffen in Wechselwirkung treten können.

Bei einer weiteren Funktionalisierung der in Schritt i) erhaltenen Polyisobutenylphenole durch eine Umsetzung im Sinne einer Mannichreaktion mit wenigstens einem Aldehyd und wenigstens einem Amin entsteht eine mit Polyisobuten alkylierte und zusätzlich Amino alkylierte Verbindung. Aufgrund der ggf. durch Quaternisierung der Aminogruppe erzielten permanenten oder bei saueren Färbebedingungen temporären positiven Ladung der Aminogruppe können diese modifizierten Polyisobutene mit anionischen Farbstoffen in Wechselwirkung treten. Des Weiteren können die auf die vorstehend genannte Weise modifizierten Polyisobutene mit Dispersionsfarbstoffen in Wechselwirkung treten. Die Dispersionsfarbstoffe eignen sich besonders gut zur Anfärbung von Polymerzusammensetzungen enthaltend Polyolefine, bevorzugt Polypropylen und auf die vorstehend genannte Weise modifizierten Polyisobutene.

### ii) Epoxidierung

Durch Epoxidierung der Polyisobutene wird ein epoxidiertes Polyisobuten erhalten. Dieses kann mit Beizenfarbstoffen, Direktfarbstoffen, Dispersionsfarbstoffen, Entwicklungsfarbstoffen, Küpenfarbstoffen, Metallkomplexfarbstoffen, Reaktivfarbstoffen, Schwefelfarbstoffen und substantiven Farbstoffen in Wechselwirkung treten.

Durch weitere Funktionalisierung der in Schritt ii) erhaltenen epoxidierten Polyisobutene durch Umsetzung mit Ammoniak können Polyisobutylaminoalkohole erhalten werden. Diese können unter geeigneten Bedingungen bevorzugt mit anionischen Farbstoffen in Wechselwirkung treten.

### iii) En-Reaktion

Durch En-Reaktion werden insbesondere mit Bernsteinsäureanhydridgruppen modifizierte Polyisobutene erhalten. Die Anhydridgruppen der erfindungsgemäßen Substanzen können vor der Verarbeitung zu Dicarbonsäure-Resten hydrolysiert werden oder reagieren während der erfindungsgemäßen Verarbeitung zumindestens teilweise zu solchen ab. Die Anhydrid- bzw. Dicarbonsäuregruppen können bevorzugt mit kationischen Farbstoffen in Wechselwirkung treten.

Die mit Bernsteinsäureanhydridgruppen modifizierten Polyisobutene können ein zweites Mal mit Maleinsäureanhydrid umgesetzt werden, wobei ein Produkt mit zwei Bernsteinsäureanhydridgruppen am Kettenende entsteht (sogenanntes PIBBSA). Dieses kann wiederum bevorzugt mit kationischen Farbstoffen in Wechselwirkung treten.

Beide oder eine der Bernsteinsäureanhydridgruppen können mit Poly- oder Oligoaminen umgesetzt werden. Geeignete Poly- oder Oligoamine und geeignete Umsetzungen wurden bereits vorstehend genannt.

### iv) Hydroformylierung

Durch Hydroformylierung sind Polyisobutene, die Alkoholgruppen aufweisen, zugänglich. Diese können mit Beizenfarbstoffen, Direkt- bzw. substantiven Farbstoffen, Dispersionsfarbstoffen, Entwicklungsfarbstoffen, Küpenfarbstoffen, Metallkomplexfarbstoffen, Reaktivfarbstoffen, Schwefelfarbstoffen und in Wechselwirkung treten.

Durch weitere Funktionalisierung der durch die Umsetzung gemäß iv) erhaltenen modifizierten Polyisobutene sind verschiedene funktionalisierte Polyisobutene zugänglich:
A) Oxocarbonsäuren
   Durch Oxidation der hydroformylierten Polyisobutene sind mit Carboxylgruppen funktionalisierte Polyisobuten zugänglich. Diese können bevorzugt mit kationischen Farbstoffen in Wechselwirkung treten.
B) Oxoalkohole
   Durch Umsetzung mit Wasserstoff in Gegenwart eines Hydrierkatalysators können die hydroformylierten Polyisobutene in mit Alkoholgruppen funktionalisierte Polyisobutene umgewandelt werden, soweit diese nicht schon direkt bei der Hydroformylierung erhalten werden. Diese können mit Beizenfarbstoffen, Direktfarbstoffen, Dispersionsfarbstoffen, Entwicklungsfarbstoffen, Küpenfarbstoffen, Metallkomplexfarbstoffen, Reaktivfarbstoffen, Schwefelfarbstoffen und substantiven Farbstoffen in Wechselwirkung treten. Des weiteren können die mit Alkoholgruppen funktionalisierten Polyisobutene zusätzlich mit Alkylenoxiden, bevorzugt Ethylenoxid, alkoxyliert werden. Die erhaltenen modifizierten Polyisobutene können mit Beizenfarbstoffen, Direkt- bzw. substantiven Farbstoffen, Dispersionsfarbstoffen, Entwicklungsfarbstoffen, Küpenfarbstoffen, Metallkomplexfarbstoffen, Reaktivfarbstoffen, Schwefelfarbstoffen und kationischen Farbstoffen in Wechsel-wirkung treten.
C) Aminsynthese
   Die in Schritt iv) erhaltenen hydroformylierten Isobutene können durch Umsetzung mit Wasserstoff und Ammoniak oder einem primären oder sekundären Amin in Gegenwart eine Aminierungskatalysators zu mit Amingruppen funktionalisierten Polyisobutenen umgewandelt werden. Diese Polyisobutene können bevorzugt mit anionischen Farbstoffen in Wechselwirkung treten.
V) Addition von Schwefelwasserstoff oder Thiolen
   Durch Umsetzung von Polyisobuten mit Schwefelwasserstoff oder einem Thiol können mit Thiogruppen funktionalisierte Polyisobutene erhalten werden. Diese können mit Beizenfarbstoffen, Direktfarbstoffen, Dispersionsfarbstoffen, Entwicklungsfarbstoffen, Küpenfarbstoffen, Metallkomplexfarbstoffen, Reaktivfarbstoffen, Schwefelfarbstoffen, substantiven und kationischen Farbstoffen in Wechselwirkung treten.
vi) Silylierung
   Bei Funktionalisierung der Polyisobutene mit Silanen werden mit Silylgruppen funktionalisierte Polyisobutene erhalten. Diese können mit Beizenfarbstoffen, Direktfarbstoffen, Dispersionsfarbstoffen, Entwicklungsfarbstoffen, Küpenfarbstoffen, Metallkomplexfarbstoffen, Reaktivfarbstoffen, Schwefelfarbstoffen, substantiven und kationischen Farbstoffen in Wechselwirkung treten.
vii) Addition von Halogenwasserstoff oder Halogen
   Durch Funktionalisierung von Polyisobuten mit halogenem Wasserstoff oder einem Halogen sind mit Halogengruppen funktionalisierte Polyisobutene zugänglich. Diese können mit Dispersions-, Direkt-, Schwefel-Farbstoffen in Wechselwirkung treten.
viii) Hydroborierung
   Durch Hydroborierung der Polyisobutene sind Alkohole zugänglich. Diese können mit Beizenfarbstoffen, Direktfarbstoffen, Dispersionsfarbstoffen, Entwicklungsfarbstoffen, Küpenfarbstoffen, Metallkomplexfarbstoffen, Reaktivfarbstoffen, Schwefelfarbstoffen und substantiven Farbstoffen in Wechselwirkung treten.
ix) Umsetzung mit einer SO₃-Quelle
   Durch Umsetzung mit SO₃-Gruppen übertragenen Verbindungen können Polyisobutene mit terminalen Sulfonsäuregruppen erhalten werden. Diese können bevorzugt mit kationischen Farbstoffen in Wechselwirkung treten.
x) Umsetzung mit Stickoxiden und anschließende Hydrierung

Durch Umsetzung mit Stickoxiden und anschließende Hydrierung der Polyisobutene sind Polyisobutene mit terminalen Aminogruppen zugänglich. Diese können bevorzugt mit anionischen Farbstoffen in Wechselwirkung treten.

Die vorstehende Auflistung stellt nur einen kleinen Ausschnitt aus den vielfältigen Möglichkeiten dar, die sich zum Färben der erfindungsgemäßen Polymerzusammensetzungen ergeben. Aufgrund der vielfältigen Funktionalisierungsmöglichkeiten der erfindungsgemäß eingesetzten modifizierten Polyisobutene sind Polyolefinzusammensetzungen erhältlich, die mit zahlreichen verschiedenen Farbstoffen in Wechselwirkung treten können, d. h. angefärbt werden können. Somit ist es möglich, eine für jede beliebige Anwendung optimale Kombination aus Polymerzusammensetzung enthaltend ein modifiziertes Polyisobuten und Farbstoff zusammenzustellen. Damit sind die erfindungsgemäßen Polymerzusammensetzungen sehr breit anwendbar.

Zur Erzielung hoher Gebrauchsechtheiten wird der Fachmann die Anfärbung mit ionischen Farbstoffen bevorzugen. Des Weiteren ist eine Anfärbung mit Metallkomplex-Farbstoffen, Küpenfarbstoffen oder Pigmentfarbstoffen bevorzugt.

Wenn die Verwendung der Polyolefin-Fasern in Mischung mit anderen Fasertypen, wie Naturfasern (beispielsweise Baumwolle oder Wolle) oder Synthesefasern (wie Polyester oder Polyamid) erforderlich ist, wird der Fachmann ggf. eine gleichzeitige Anfärbung mit demselben Farbstofftyp bevorzugen, z.B. die Färbung einer Baumwoll/Polypropylen-Mischung mit Direktfarbstoffen. Eine Polyester/Polypropylen-Mischung kann zum Beispiel mit Dispersionsfarbstoffen angefärbt werden.

Geeignete Flotten zum Einfärben der erfindungsgemäßen Polymerzusammensetzungen oder der erfindungsgemäßen Fasern, Folien und Formkörper sowie geeignete Färbeverfahren und für die verschiedenen Färbeverfahren geeignete Farbstoffe sind dem Fachmann bekannt. Die Färbungen können in unterschiedlichen Aufmachungsformen (als Garn, Kabel, Gewebe, Maschenware oder Vlies) diskontinuierlich in üblichen Färbeapparaten wie Haspelkufen, Garnfärbeapparaten, Stückbaumfärbeapparaten und Jets erfolgen oder kontinuierlich durch Klotz-, Pflatsch-, Sprüh- oder Schaumauftragsverfahren mit geeigneten Trocken- und Fixiereinrichtungen erfolgen.

Die eingefärbten Polymerzusammensetzungen enthalten:
a) wenigstens ein hydrophobes Polymer, wie es in Anspruch 1 definiert ist,
b) wenigstens ein mit terminalen, polaren Gruppen modifiziertes Polyisobuten, das durch Funktionalisierung von reaktivem Polyisobuten mit einem zahlenmittleren Molekulargewicht Mₙ von 150 bis 50000 erhältlich ist, und
c) wenigstens einen Farbstoff.

Geeignete Polyolefine, Polyisobutene und Farbstoffe sind bereits vorstehend genannt.

Besonders bevorzugt sind Kombinationen von mit anionisch *beziehungsweise* kationisch modifizierten Polyisobutenen und den entgegengesetzt geladenen Farbstoffen. Des Weiteren sind Kombinationen von anionisch und kationisch modifizierten Polyisobutenen mit Metallkomplex-Farbstoffen bevorzugt.

Diese Polymerzusammensetzungen zeichnen sich dadurch aus, dass sie die hervorragenden Eigenschaften der Polyolefine mit einer guten Anfärbbarkeit, die aufgrund der eingesetzten modifizierten Polyisobutene erreicht wird, kombinieren. Die Polymerzusammensetzungen zeichnen sich dadurch aus, dass der Farbstoff gut in der Polymerzusammensetzung fixiert ist und schwer auswaschbar ist. Des Weiteren können die Polymerzusammensetzungen mit den für die jeweils geeigneten Farbstoffen bekannten Verfahren und Hilfsmitteln zur Einfärbung von Polymerzusammensetzungen eingefärbt werden.

Es werden auch Fasern, Folien und Formkörper aufgebaut aus der erfindungsgemäßen eingefärbten Polymerzusammensetzung beschrieben.

Die eingefärbten Polymerzusammensetzungen bzw. eingefärbten Fasern, Folien und Formkörper können auf verschiedene Weise erhalten werden. Das ist unter anderem davon abhängig, wann das modifizierte Polyisobuten dem hydrophoben Polymer, insbesondere Polyolefin, zugegeben wird. Wie bereits obenstehend erläutert, ist dies direkt bei der Herstellung des hydrophoben Polymers, insbesondere Polyolefins, bei seiner Weiterverarbeitung oder im Anschluss an seine Verarbeitung möglich. Der Farbstoff wird bevorzugt im Anschluss an die Verarbeitung der Polymerzusammensetzungen eingebracht oder auf die erhaltenen Fasern, Folien und Formkörper aufgebracht. Es ist jedoch auch möglich, die Polymerzusammensetzung selbst direkt anzufärben.

Bevorzugt eingesetzte modifizierte Polyisobutene sowie bevorzugt eingesetzte hydrophobe Polymere, insbesondere Polyolefine, sind dem Fachmann bekannt. Der Ausdruck "Hydrophilierung " ist dem Fachmann ebenfalls bekannt.

Die nachfolgenden Beispiele erläutern die Erfindung zusätzlich.

### Beispiele

### Extrusionsversuche

Polypropylen: Metocene^{®} X50248 (Fa. Basell). Metocene^{®} X50248 ist ein Homo-Polypropylen (Metallocen-Katalyse). Es ist speziell geeignet für Vliesstoffe, Stapelfasern und Filamente.

**Produktdaten des Homo-Polypropylens ohne Zusätze:**

| Eigenschaften | Methode | Einheit | Werte |
|---|---|---|---|
| Melt Flow Rate | ISO 1133 | g/10 min | 18 |
| Zugkraft | ISO 527-2 | MPa | 32 |
| Dehnung | ISO 527-2 | % | 9 |
| Dehnung bei Bruch | ISO 527-2 | % | > 50 |
| Schmelzpunkt (DSC) | ISO 3146 | °C | 146 |
| Wärmeformbeständigkeit | ISO 75-2 | °C | 88 |
| Dichte | ISO 1183 | G/cm³ | 0,91 |

Es wurden jeweils 5 Gew.-% der unten angegebenen, mit terminalen, polaren Gruppen modifizierten Polyisobutene zu dem Polypropylen-Granulat gegeben.

Die Versuche wurden im Doppelschneckenextruder bei 180 °C Gehäusetemperatur und 200 U/min durchgeführt. Die Düsenleistungen betragen 1x4 mm.

Der Durchsatz beträgt 5 kg/h, das mit polaren Gruppen modifizierte Polyisobuten (Additiv) wird mit einem Durchsatz von 250 g/h zugegeben. Die Dosierpumpe läuft mit 100-200 g/h.

### Verspinnen:

Die Verstreckung beträgt 1:3 und der Titer 17 dtex. Das Verspinnen erfolgt bei einer Temperatur von 200 °C/230 °C.

### Herstellung textiler Flächengebilde:

Alle extrudierten, mit den erfindungsgemäßen Substanzen additivierten Polymerfasern wurden zu Geweben oder Strickstücken verarbeitet, die nach den unten angegebenen Methoden gefärbt wurden. Die Verwendung textiler Flächengebilde gewährleistet die Beurteilung der Egalität von Textilveredlungsprozessen und z.B. des Griffs.

### Probe-Platten:

Von jedem Granulat, das nach der Extrusion erhalten wurde, wurden Platten gepresst (ca. 160 x 160 x 2 mm; Gewicht ca. 46 g; Presszeit 4 min bei 220 °C , jeweils 1 min. bei 50, 100, 150 und 200 bar).

Von den erhaltenen Platten wurden Färbeversuche gemacht:

### Färbungen:

Die Färbungen wurden durchgeführt, indem man die aus mit den erfindungsgemäßen Substanzen additiviertem Polypropylen hergestellten Strickstücke unter Zusatz der angegebenen Farbstoffe in entsalztem Wasser bei den angegebenen pH-Werten in einem AHIBA-Färbeapparat von anfänglich 110 °C innerhalb 20 Minuten bis 130 °C erhitzte und 2 Stunden bei 130 °C beließ. Das Verhältnis von Polypropylen-haltiger Maschenware (trocken) in Kilogramm zum Volumen des Behandlungsbads in Liter, das so genannte Flottenverhältnis, betrug 1:50. Nach der Färbung wurde auf ca. 80 °C abgekühlt, die Färbungen wurden entnommen, kalt gespült und bei 100 °C getrocknet.

Beurteilt wurde die erzielte Farbtiefe. Ein jeweils mitbehandeltes Vergleichsstrickstück aus nicht-additiviertem Polypropylen zeigte überhaupt keine Anfärbung.

### Kationischer Farbstoff.

1,1% Basacryl Rot X-BL 300% *(von DyStar GmbH)*

### Erfindungsgemäß eingesetztes Polyisobuten:

*a)* Aus Polyisobuten der Molmasse 550 durch En-Reaktion mit Maleinsäureanhydrid erhaltenes Polyisobuten-Bernsteinsäureanhydrid, das mit Wasser zur Dicarbonsäure hydrolysiert wurde;
*b)* Aus Polyisobuten der Molmasse 550 bzw. 1000 durch Sulfonierung hergestellte Polyisobuten-Sulfonsäure (hergestellt in Analogie zu WO 01/70830 A2);
*c)* Aus Polyisobuten der Molmasse 550 durch En-Reaktion mit Maleinsäureanhydrid erhaltenes Polyisobuten-Bernsteinsäureanhydrid, das mit Polyglycolether der Molmasse 300 zum entsprechenden Halbester umgesetzt wurde.

Flottenverhältnis = 1:50 (Anmerkung: Die hier angegebenen, langen Flottenverhältnisse wurden wegen der kleinen Substratmengen angewendet und hängen nicht mit den erfindungsgemäß verwendeten Substanzen zusammen. Im technischen, d.h. Produktions-Maßstab kann bei den heute üblichen, sehr kurzen Flottenverhältnisse gearbeitet werden.)
pH 6, eingestellt mit Pufferlösung

### Anionischer Farbstoff:

2,5% Telonrot FRL 200% (von DyStar GmbH)

### Erfindungsgemäß eingesetztes Polyisobuten:

*d)* Aus Polyisobuten der Molmasse 1000 durch Alkylierung mit Phenol und anschließende Mannich-Reaktion mit Formaldehyd und Tetraethylenpentamin erhaltenes Polyisobuten-Mannich-TEPA (hergestellt nach oder in Analogie zu WO 01/25 293 und WO 01/25 294);

*e)* Aus Polyisobuten der Molmasse 1000 durch En-Reaktion mit Maleinsäureanhydrid erhaltenes Polyisobuten-Bernsteinsäureanhydrid, das mit Tetraethylenpentamin zum entsprechenden Succinimid umgesetzt wurde.
Flottenverhältnis = 1:50
pH 4,5, eingestellt mit Pufferlösung

Die erhaltenen Färbungen fielen auch ohne Zusatz eines Egalisiermittels egal und farbtief aus. Im Falle der PIBSA-PEG-Halbester fielen die Färbungen deutlich heller aus. Der Griff der Strickstücke war nicht verhärtet. Zur Bestimmung der Waschechtheit der erhaltenen Färbungen erfolgte eine Schnellwäsche mit 2g/l FEWA (Feinwaschmittel), Flottenverhältnis 1:200, 5 Minuten bei 60 °C. Beurteilt wurde, ob sich die PP-Färbung während der Wäsche aufhellte, d.h. ob Farbstoff ausblutete, und ob Begleitgewebe angeschmutzt wurde.

Küpenpigment-Farbstoffe:
Caledon^{®} Gelb SF-B; Caledon^{®} Rot SF-B, Caledon^{®} Blau SF-B (von DyStar GmbH)

Erfindungsgemäß eingesetztes Polyisobuten:
e) Aus Polyisobuten der Molmasse 1000 durch En-Reaktion mit Maleinsäureanhydrid erhaltenes Polyisobuten-Bernsteinsäureanhydrid, das mit Tetraethylenpentamin zum entsprechenden Succinimid umgesetzt wurde.
*f*) Aus Polyisobuten der Molmasse 1000 durch Alkylierung mit Phenol und anschließende Mannich-Reaktion mit Formaldehyd und bis-(Dimethylaminopropylen)amin erhaltenes Polyisobuten-Mannich mit bis-(Dimethylaminopropylen)amin (hergestellt in Analogie zu WO 01/25 293 und WO 01/25 294)

Es wurden jeweils 2,5 Gew.-% der gemäß e) bzw. f) modifizierten Polyisobutene zu Polypropylen-Granulat (Moplen^{®}HP 561 S von Basell) gegeben.
Farbstoff: 2,5 %
Flottenverhältnis 1 : 20
pH-Werte (eingestellt mit Pufferlösung): 4
Gefärbt wurde im AHIBA-Färbeapparat, Eingang bei 100 °C, in 20 Minuten auf 120 °C aufheizen, 60 min bei 120 °C halten.

Alle Proben wurden kalt gespült und bei 100 °C getrocknet. Die Färbungen waren intensiv, wasch- und lichtecht.

Sulfogruppenfreie Metallkomplexfarbstoffe:
C. I. Acid Red 228; Acid Yellow 59; Acid Violet 74

Erfindungsgemäß eingesetztes Polyisobuten:
e) Aus Polyisobuten der Molmasse 1000 durch En-Reaktion mit Maleinsäureanhydrid erhaltenes Polyisobuten-Bernsteinsäureanhydrid, das mit Tetraethylenpentamin zum entsprechenden Succinimid umgesetzt wurde.
f) Aus Polyisobuten der Molmasse 1000 durch Alkylierung mit Phenol und anschließende Mannich-Reaktion mit Formaldehyd und bis-(Dimethylaminopropylen)amin erhaltenes Polyisobuten-Mannich mit bis-(Dimethylaminopropylen)amin (hergestellt in Analogie zu WO 01/25 293 und WO 01/25 294);

Farbstoff: 2,5 %
Flottenverhältnis 1 : 20
pH-Werte (eingestellt mit Pufferlösung) : 4
Gefärbt wurd im AHIBA-Färbeapparat, Eingang bei 100 °C, in 20 Minuten auf 120 °C aufheizen, 60 Minuten bei 120 °C aufheizen.

Alle Proben wurden kalt gespült und bei 80 °C getrocknet.
Die Färbungen sind farbtief und von guten Farbechtheiten.

### Sulfogruppenhaltige Metallkomplexfarbstoffe:

Isolan^{®}Bordo 2S-BL, Isolan^{®} Dunkelblau 2S-GL, Isolan^{®} Gelb S-GL, Isolan^{®} Rot S-RL, Isolan^{®} Marineblau S-RL (von DyStar GmbH)

Erfindungsgemäß eingesetztes Polyisobuten:
e) Aus Polyisobuten der Molmasse 1000 durch En-Reaktion mit Maleinsäureanhydrid erhaltenes Polyisobuten-Bernsteinsäureanhydrid, das mit Tetraethylenpentamin zum entsprechenden Succinimid umgesetzt wurde.
f) Aus Polyisobuten der Molmasse 1000 durch Alkylierung mit Phenol und anschließende Mannich-Reaktion mit Formaldehyd und bis-(Dimethylaminopropylen)amin erhaltenes Polyisobuten-Mannich mit bis-(Dimethylaminopropylen)amin (hergestellt in Analogie zu WO 01/25 293 und WO 01/25 294);

3 % Farbstoff
pH mit 3 % Essigsäure 30 %ig einstellen
Flottenverhältnis 1 : 20
Anfangstemperatur 30 °C, mit 2 °C/min auf 120 °C aufheizen, 60 min
bei 120 °C halten, abkühlen, spülen, waschen.

Es wurden farbtiefe Färbungen mit guten Farbechtheiten erhalten.

Mit allen erfindungsgemäßen Substanzen werden befriedigende Waschechtheiten erhalten.

### Herstellung der gemäß a) bis e) eingesetzten modifizierten Polyisobuten-Derivate

Zu a)
   Darstellung von PIB-Bernsteinsäureanhydrid in Analogie zu DE-A 4 319 672, EP-A 0 156 310 oder H. Mach und P. Rath in "Lubrication Science II (1999), S. 175-185. Hydrolyse von PIBSA 550:
   In einem 11 Dreihalskolben werden 50 ml Wasser und 50 ml Tetrahydrofuran bei Raumtemperatur vorgelegt. Dazu tropft man eine Lösung von 275 g PIBSA (85 % α-Olefinanteile, Mₙ = 550; DP =1,65; bezogen auf das Polyisobuten) in 150 ml Tetrahydrofuran zu. Anschließend wird noch 30 min bei dieser Temperatur gerührt. Danach wird das Lösungsmittel unter vermindertem Druck vollständig abgezogen. Um das restliche Wasser zu entfernen wird es als Aceotrop mit Toluol ausgeschleppt. Anschließend wird über Na₂SO₄ getrocknet.
      IR-Spektrum: OH-Schwingung bei 3454 cm⁻¹, C=O Valenzschwingung des Bernsteinsäuregerüstes bei 1710 cm⁻¹, C=C Valenzschwingung 1636 cm⁻¹. Daneben finden sich Schwingungen des PIB-Gerüstes: 2951, 2896, 1473, 1389, 1365 und 1236 cm⁻¹.
Zu b)
   Darstellung in Analogie zu WO O1 / 70830 A2
Zu c)
   Umsetzung von Polyisobuten 550 mit Polyglycolether 300 zum entsprechenden Halbester.
   In einem 2 l Dreihalskolben werden 347 g PIBSA (85 % α-Olefinanteile, Mₙ = 550; DP =1,65; bezogen auf das Polyisobuten) vorgelegt und auf 90 °C aufgeheizt. Dazu tropft man 300 g Polyethylenglykol (Pluriol^{®} E 300, Mₙ = 300), das auf 80 °C aufgeheizt wurde. Der Ansatz wird nach beendeter Zugabe noch 3 h bei 90 °C und danach abgekühlt.
   IR-Spektrum: OH-Schwingung bei 3298 cm⁻¹, C=O Valenzschwingung des Bemsteinsäurehalbestergerüstes bei 1734 cm⁻¹, C=C Valenzschwingung 1639 cm⁻¹, C-O-C Etherschwingung bei 1110 cm⁻¹. Daneben finden sich Schwingungen des PIB-Gerüstes: 2953, 2893, 1471, 1389, 1366 und 1233 cm⁻¹.
   Analog wurden Umsetzungen mit variablen PIBSA-Resten (PIBanteil Mₙ = 200, 550, 1000, 2300 u.s.w.) und Polyethlenglykolresten (Mₙ = 300, 600, 1500, 4000, 6000, 9000, 12000 u.s.w.) bei Beachtung der Einwaagen realisiert.
Zu d)
   Darstellung in Analogie zu WO 01/25 293 und WO 01/25 294
Zu e)
   PIBSA 1000 mit Tetraethylpentamin (PIBSA-Imid)
   In einem 2 l Vierhalskolben werden 582 g PIBSA (85 % α-Olefinanteile, Mₙ = 1000; DP =1,70; bezogen auf das Polyisobuten) und 63,8 g Ethylhexanol unter Inertgasatmosphäre (N₂-Schutz) vorgelegt. Es wird auf 140 °C aufgeheizt, bevor 99,4 g Tetraethylpentamin zugetropft werden. Nach erfolgter Zugabe wird auf 160 °C geheizt und 3 h die Temperatur gehalten. Während der Reaktion destillieren teilweise flüchtige Bestandteile über. Zur Vollständigkeit wird gegen Ende der Reaktion der Druck für 30 min auf 500 mbar gesenkt. Danach kühlt man auf Raumtemperatur ab.
   IR-Spektrum: NH-Schwingung bei 3295, 1652 cm⁻¹, C=O Valenzschwingung des Bernsteinsäureimidgerüstes bei 1769, 1698 cm⁻¹. Daneben finden sich Schwingungen des PIB-Gerüstes: 2953, 1465, 1396, 1365 und 1238 cm⁻¹.
Zu f) Darstellung in Analogie zu WO 01/25 293 und WO 01/25294.

## Patentansprüche

1. Polymerzusammensetzung enthaltend
a) wenigstens ein hydrophobes Polymer in Form eines Homo- oder Copolymers des Propylens oder in Form eines Homo- oder Copolymers des Ethylens, und
b) wenigstens ein mit terminalen, polaren Gruppen modifiziertes Polyisobuten, das durch Funktionalisierung von reaktivem Polyisobuten mit einem zahlenmittleren Molekulargewicht Mₙ von 150 bis 50000 erhältlich ist.

2. Polymerzusammensetzung nach Anspruch 1, **dadurch gekennzeichnet, dass** das reaktive Polyisobuten einen Gehalt an endständigen Doppelbindungen von mindestens 50 mol% aufweist.

3. Polymerzusammensetzung nach einem der Ansprüche 1 oder 2, **dadurch gekennzeichnet, dass** die Funktionalisierung des Polyisobutens ein- oder mehrstufig erfolgt und ausgewählt ist aus:
i) Umsetzung mit aromatischen Hydroxyverbindungen in Gegenwart eines Alkylierungskatalysators unter Erhalt von mit Polyisobuten alkylierten aromatischen Hydroxyverbindungen;
ii) Umsetzung des Polyisobutens mit einer Peroxi-Verbindung unter Erhalt eines epoxidierten Polyisobutens;
iii) Umsetzung des Polyisobutens mit einem Alken, das eine elektrophil substituierte Doppelbindung aufweist (Enophil), in einer En-Reaktion;
iv) Umsetzung des Polyisobutens mit Kohlenmonoxid und Wasserstoff in Gegenwart eines Hydroformylierungskatalysators unter Erhalt eines hydroformylierten Polyisobutens;
v) Umsetzung des Polyisobutens mit Schwefelwasserstoff oder einem Thiol unter Erhalt eines mit Thiogruppen funktionalisierten Polyisobutens;
vi) Umsetzung des Polyisobutens mit einem Halogen oder einem Halogenwasserstoff unter Erhalt eines mit Halogengruppen funktionalisierten Polyisobutens;
vü) Umsetzung des Polyisobutens mit einem Boran und anschließender oxidativer Spaltung unter Erhalt eines hydroxylierten Polyisobutens;
viii) Umsetzung des Polyisobutens mit einem Silan in Gegenwart eines Silylierungskatalysators unter Erhalt eines mit Silylgruppen funktionalisierten Polyisobutens;
ix) Umsetzung des Polyisobutens mit einer SO₃-Quelle, bevorzugt Acetylsulfat unter Erhalt von Polyisobutenen mit terminalen Sulfonsäuregruppen;
x) Umsetzung des Polyisobutens mit Stickoxiden und anschließende Hydrierung unter Erhalt von Polyisobutenen mit terminalen Aminogruppen.

4. Polymerzusammensetzung nach einem der Ansprüche 1 bis 3, zusätzlich enthaltend
c) wenigstens einen Farbstoff.

5. Fasern, Folien und Formkörper aufgebaut aus einer Polymerzusammensetzung nach einem der Ansprüche 1 bis 4.

6. Verfahren zur Herstellung einer Polymerzusammensetzung nach einem der Ansprüche 1 bis 4, **dadurch gekennzeichnet, dass** man das hydrophobe Polymer (Komponente A) oder die zur Herstellung des hydrophoben Polymers eingesetzten Monomere mit wenigstens einem mit terminalen, polaren Gruppen modifizierten Polyisobuten (Komponente B) in Kontakt bringt.

7. Verfahren zur Herstellung nach Anspruch 6, **dadurch gekennzeichnet, dass** das Polyisobuten als Comonomer bei der Herstellung des hydrophoben Polymers eingesetzt wird.

8. Verfahren nach Anspruch 6 oder 7, **dadurch gekennzeichnet, dass** die hergestellte Polymerzusammensetzung mit einer Flotte enthaltend mindestens einen Farbstoff in Kontakt gebracht wird.

## Claims

1. A polymer composition comprising
a) at least one hydrophobic polymer in the form of a homo- or copolymer of propylene or in the form of a homo- or copolymer of ethylene, and
b) at least one polyisobutene which is modified by terminal polar groups and is obtainable by functionalization of reactive polyisobutene having a number average molecular weight Mₙ from 150 to 50 000.

2. The polymer composition according to claim 1 wherein said reactive polyisobutene has a terminal double bond content of not less than 50 mol%.

3. The polymer composition according to either of claims 1 and 2 wherein said functionalization of said polyisobutene is accomplished in one or more stages and is selected from:
i) reaction with aromatic hydroxy compounds in the presence of an alkylation catalyst to obtain polyisobutene-alkylated aromatic hydroxy compounds;
ii) reaction of said polyisobutene with a peroxy compound to obtain an epoxidized polyisobutene;
iii) reaction of said polyisobutene with an alkene having an electrophilically substituted double bond (an enophile) in an ene reaction;
iv) reaction of said polyisobutene with carbon monoxide and hydrogen in the presence of a hydroformylation catalyst to obtain a hydroformylated polyisobutene;
v) reaction of said polyisobutene with hydrogen sulfide or a thiol to obtain a thio-functionalized polyisobutene;
vi) reaction of said polyisobutene with halogen or a hydrogen halide to obtain a halogen-functionalized polyisobutene;
vii) reaction of said polyisobutene with a borane and subsequent oxidative cleavage to obtain a hydroxylated polyisobutene;
viii) reaction of said polyisobutene with a silane in the presence of a silylation catalyst to obtain a silyl-functionalized polyisobutene;
ix) reaction of said polyisobutene with an SO₃ source, preferably acetyl sulfate, to obtain polyisobutenes having terminal sulfonic acid groups;
x) reaction of said polyisobutene with nitrogen oxides and subsequent hydrogenation to obtain polyisobutenes having terminal amino groups.

4. The polymer composition according to any of claims 1 to 4 further comprising c) at least one dye.

5. Fibers, films and moldings formed from a polymer composition according to any of claims 1 to 4.

6. A process for producing a polymer composition according to any of claims 1 to 4, which comprises contacting said hydrophobic polymer (component A) or the monomers used for preparing said hydrophobic polymer with at least one polyisobutene modified by terminal polar groups (component B).

7. The process according to claim 6 wherein said polyisobutene is used as a comonomer in the preparation of said hydrophobic polymer.

8. The process according to claim 6 or 7 wherein the polymer composition produced is contacted with a liquor comprising at least one dye.

## Revendications

1. Composition de polymères contenant
a) au moins un polymère hydrophobe sous la forme d'un homopolymère ou d'un copolymère de propylène ou sous la forme d'un homopolymère ou d'un copolymère d'éthylène, et
b) au moins un polyisobutène modifié par des groupements polaires terminaux, qui peut être obtenu par fonctionnalisation de polyisobutène réactif d'un poids moléculaire moyen en nombre Mₙ de 150 à 50.000.

2. Composition de polymères selon la revendication 1, **caractérisée en ce que** le polyisobutène réactif présente une teneur en doubles liaisons terminales d'au moins 50% en mole.

3. Composition de polymères selon l'une quelconque des revendications 1 ou 2, **caractérisée en ce que** la fonctionnalisation du polyisobutène se fait en une ou plusieurs étapes et est choisie parmi les suivantes :
i) une réaction avec des composés hydroxyaromatiques en présence d'un catalyseur d'alkylation pour obtenir des composés hydroxyaromatiques alkylés par du polyisobutène;
ii) une réaction du polyisobutène avec un composé peroxydé pour obtenir un polyisobutène époxydé;
iii) une réaction du polyisobutène avec un alcène, qui présente une double liaison substituée par voie électrophile (énophile) dans une réaction ène;
iv) une réaction du polyisobutène avec du monoxyde de carbone et de l'hydrogène en présence d'un catalyseur d'hydroformylation pour obtenir un polyisobutène hydroformylé;
v) une réaction du polyisobutène avec du sulfure d'hydrogène ou un thiol pour obtenir un polyisobutène fonctionnalisé par des groupements thio;
vi) une réaction du polyisobutène avec un halogène ou un hydrohalogène pour obtenir un polyisobutène fonctionnalisé par des groupements halogène;
vii) une réaction du polyisobutène avec un borane suivie d'un clivage oxydatif pour obtenir un polyisobutène hydroxylé;
viii) une réaction du polyisobutène avec un silane en présence d'un catalyseur de silylation pour obtenir un polyisobutène fonctionnalisé par des groupements silyle;
ix) une réaction du polyisobutène avec une source de SO₃, de préférence du sulfate d'acétyle pour obtenir des polyisobutènes à groupements terminaux acide sulfonique; et
x) une réaction du polyisobutène avec des oxydes d'azote suivie d'une hydrogénation pour obtenir des polyisobutènes à groupements amino terminaux.

4. Composition de polymères selon l'une quelconque des revendications 1 à 3, contenant en plus
c) au moins un colorant.

5. Fibres, feuilles et corps moulés préparés à partir d'une composition de polymères selon l'une quelconque des revendications 1 à 4.

6. Procédé pour fabriquer une composition de polymères selon l'une quelconque des revendications 1 à 4, **caractérisé en ce que** l'on met en contact le polymère hydrophobe (composant A) ou les monomères utilisés dans la fabrication du polymère hydrophobe avec au moins un polyisobutène modifié par des groupements polaires terminaux (composant B).

7. Procédé de fabrication selon la revendication 6, **caractérisé en ce que** l'on utilise le polyisobutène comme comonomère dans la fabrication du polymère hydrophobe.

8. Procédé selon la revendication 6 ou 7, **caractérisé en ce que** la composition de polymères fabriquée est mise en contact avec un bain contenant au moins un colorant.
